# EUROPEAN PATENT SPECIFICATION

(11) **EP 4 416 341 B1**
(45) Date of publication and mention of the grant of the patent: **20.08.2025**
(21) Application number: 22802366.9
(22) Date of filing: 13.10.2022
(51) Int. Cl.: E02D 5/80, E02D 7/22, E02D 5/56, E02D 13/10, E21D 20/00

(54) **LOCKING DOG ASSEMBLY**
VERRIEGELUNGSBÜGELANORDNUNG
ENSEMBLE GRIFFE DE BLOCAGE

(30) Priority: 14.10.2021 US 202163255736 P; 22.11.2021 US 202163281824 P
(43) Date of publication of application: 21.08.2024
(73) Proprietor: Hubbell Incorporated, Shelton, CT 06484 (US)
(72) Inventor: BROWN, Joseph Reed, Centralia, MO 65240 (US)
(74) Representative: Wilson Gunn
(86) International application number: PCT/US2022/046547
(87) International publication number: WO 2023/064454

(56) References cited:
- WO-A2-2005/007993
- US-A- 2 662 712
- US-A- 3 377 077
- US-A- 4 580 795
- US-A1- 2005 126 823
- US-A1- 2013 028 666
- US-A1- 2013 189 040

## Description

### FIELD OF THE INVENTION

The present disclosure relates to drive tools typically used to install helical anchors and piles, and more particularly, to locking dog assemblies and operating mechanisms for such tools.

### BACKGROUND

Helical anchors and piles are used in a variety of applications including, for example, for foundation construction and repair, securing underwater moorings, and securing and supporting utility poles. For example, when a utility pole is installed or repaired, one or more anchors may be driven into the ground adjacent to the utility pole. One end of a guy wire attaches to the utility pole and the opposite end attaches to an anchor secured in the ground.

Anchors and piles may be similarly constructed, though anchors are generally used in tension and piles are generally used in compression. This disclosure is equally applicable to both anchors and piles, and tools for installing anchors and piles, without limitation.

Helical anchors and piles typically include a central shaft or rod with helical bearing plates. Depending on the soil type and desired depth, significant torque is required to install a helical anchor or pile. Anchors and piles are generally installed using an anchor/pile drive tool powered by a utility truck, heavy equipment, or a portable drive unit. A torque indicator may be provided between an upper end of the drive tool and a hex or square output shaft. The equipment rotates the output shaft to drive the anchor or pile into the ground. The upper end of the anchor or pile and/or extension pieces to the anchor or pile are received within the drive tool and locked in place during installation.

Some exemplary drive tools, such as the Chance^{®} locking dog assemblies offered by Applicant, are used in conjunction with a hollow drive wrench. The top of the drive wrench is received by the locking dog assembly. Spring-loaded locking dogs or pins in the locking dog assembly catch in holes in the drive wrench to releasably secure the drive wrench.

The anchor and/or extension pieces to the anchor are received within the drive wrench and locking dog assembly and locked in place during installation. Spring-loaded locking dogs or pins in the locking dog assembly catch under the head of the anchor to releasably secure the anchor in the wrench.

The locking dog springs can be damaged by a backlash event during which a large amount of stored energy is released into kinetic energy instantaneously. A backlash event may be the result of a mechanical failure, such as anchor or pile breakage, and may also occur during normal use if a shear pin torque limiter is used at high torque loads. Backlash is an extreme angular acceleration of the drive tool which abruptly throws the locking dogs outward against the springs. This often damages the springs and results in impaired locking dog function. Severely damaged springs do not securely hold the locking dogs in the engaged position and create a safety hazard due to the potential of dropping the drive wrench and/or anchor/pile.

Further, locking dog operation is often difficult due to the motion required and the position of the locking dogs when operation is needed. In existing devices, each locking dog is pushed inward along its axis and held in the engaged position by the spring which requires significant force (e.g., about 20 pounds) to fully compress when the locking dog is pulled out. The motion required to disengage the locking dog is generally an outward pull against the force of the spring and a rotation of the locking dog about its axis to secure it in the disengaged position via an operating ring attached to the outer end of the locking dog. The locking dog is automatically reengaged by its spring when the ring and locking dog are rotated to the proper position.

Each locking dog is typically operated independently from the other, and it is common for the act of disengaging the second locking dog to jar the tool and cause the first locking dog to reengage. In some use cases, the locking dogs are about seven feet above ground level making it difficult for the operator to produce enough force to disengage the locking dog while reaching overhead. In other use cases, the locking dogs are 10 feet or more above ground level, and the operator must stand on an elevated surface or use an extended tool to reach and disengage them. The locking dogs may also be positioned at or near ground level, which is also an awkward position in which to disengage the locking dogs.

Furthermore, significant load can be present between the locking dogs and the drive wrench and/or anchor/pile retained by the locking dogs. Binding due to this load can make it very difficult to pull out the dogs, and damage to the locking dog operating rings is common when leverage is required to pull out the locking dogs. US2662712A discloses a body including inner cavity with a lower opening, first cylindrical cavity on a first side of the body, and a second cylindrical cavity on a second side of the body opposite the first side, a first locking dog in the first cylindrical cavity at least partially extending through the first side of the body and displaceable into and out of the inner cavity, a second locking dog in the second cylindrical cavity at least partially extending through the second side of the body, and displaceable into and out of the inner cavity, a mechanism for simultaneous displacement of the first and second locking dogs with mechanical advantage.

Thus, there is a need for improved locking dog assemblies that are easier to operate and not prone to hazardous failures. The present invention solves these and other problems in the prior art.

### SUMMARY

An object of the present invention is to provide a locking dog assembly with improved ergonomics for the locking dog operation. A further object is the provision of a feature to protect the locking dog springs from damage and reduce or eliminate the chance of a safety hazard from damaged springs. A further object is to provide mechanical advantage for actuating locking dogs, particularly when retracting the locking dogs when binding force is present. The features and locking dog assemblies described herein may be useful for installing helical anchors and piles, though the applications are not limited thereto.

In one exemplary embodiment, a locking dog assembly is provided with a mechanism enabling simultaneous operation of both locking dogs. In some exemplary embodiments, the locking dog assembly includes a feature such as a step within the cylinder wall acting as a stop for outward travel of the locking dog.

In accordance with the present invention, a locking dog assembly is provided having the features of claim 1.

Optional, preferred features are defined in the dependent claims.

The step between the proximal and central portions of each housing when provided engages against the step between the distal and central portions of each locking dog when the locking dog is in a fully disengaged position. This interaction between the steps defines a stop limiting a range of movement of the respective locking dog and protecting the respective spring from being over-compressed.

The cam assembly and lever are just one example of the mechanism. One skilled in the art will understand from this disclosure that other mechanisms may be used for simultaneous operation, such as different cam mechanisms, a rack and pinion mechanism, a lead screw mechanism, a solenoid mechanism, a linkage and actuator mechanism, a crank and rod mechanism, a chain loop and sprocket mechanism, a drum and cable mechanism, a scissor mechanism, and/or a wedge mechanism. The mechanism may be hand actuated, or driven hydraulically, pneumatically, or via an electric motor or actuator.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is an isometric view of a locking dog assembly according to an exemplary embodiment of the present disclosure;
FIG. 2 is an isometric view of the locking dog assembly of FIG. 1 with a cover removed;
FIG. 3 is a front view of the locking dog assembly of FIG. 1;
FIG. 4 is a front view of the locking dog assembly of FIG. 1 with the cover, lever, and lever retaining hardware removed;
FIGS. 5A and 5B are partial front views of the locking dog assembly of FIG. 1 with the cover, lever, and lever retaining hardware removed;
FIG. 6A is a bottom view of the locking dog assembly of FIG. 1 with the locking dogs in an engaged position;
FIG. 6B is a bottom view of the locking dog assembly of FIG. 1 with the locking dogs in a disengaged position;
FIG. 7 is an isometric view of a cam assembly and locking dogs of the locking dog assembly of FIG. 1;
FIG. 8 is a rear sectional view of the cam assembly and locking dogs of FIG. 7;
FIG. 9 is an isometric view of a locking dog assembly according to an exemplary embodiment of the present disclosure without a front cover;
FIGS. 10A and 10B are front views of the locking dog assembly of FIG. 9 with the lever and lever retaining hardware removed;
FIG. 11 is an isometric view of a locking dog assembly according to an exemplary embodiment of the present disclosure;
FIG. 12A is an isometric view of a locking dog assembly according to an exemplary embodiment of the present disclosure with locking dogs in an engaged position;
FIG. 12B is another isometric view of the locking dog assembly of FIG. 12A with the locking dogs in a disengaged position;
FIG. 13A is a partial bottom view of the locking dog assembly of FIG. 12A with locking dogs in an engaged position;
FIG. 13B is a bottom view of the locking dog assembly of FIG. 12B with locking dogs in a disengaged position;
FIG. 14 is an isometric view of a cam assembly and locking dogs of the locking dog assembly shown in FIGS. 12A and 12B;
FIG. 15 is an isometric view of a lever and cam element of the locking dog assembly shown in FIGS. 12A and 12B;
FIG. 16 is an isometric view of a locking dog assembly according to an exemplary embodiment of the present disclosure;
FIG. 17 is an isometric view of a locking dog assembly according to an exemplary embodiment of the present disclosure;
FIG. 18 is an isometric view of a locking dog assembly according to an exemplary embodiment of the present disclosure;
FIG. 19 is an isometric view of a locking dog assembly according to an exemplary embodiment of the present disclosure;
FIG. 20A is an isometric view of a locking dog assembly according to an exemplary embodiment of the present disclosure;
FIG. 20B is a front view of the locking dog assembly shown in FIG. 20A with a lever and lever retaining hardware removed;
FIG. 21 is an isometric view of a locking dog assembly according to an exemplary embodiment of the present disclosure;
FIG. 22 is an isometric view of a locking dog assembly according to an exemplary embodiment of the present disclosure;
FIG. 23 is an isometric view of a locking dog assembly according to an exemplary embodiment of the present disclosure;
FIG. 24A is an isometric view of a retention feature according to an exemplary embodiment of the present disclosure;
FIG. 24B is an exploded view of the retention feature shown in FIG. 24A;
FIGS. 24C and 24D are isometric views of a drum of the retention feature shown in FIG. 24A;
FIG. 25 is an isometric view of a locking dog assembly according to an exemplary embodiment of the present disclosure; and
FIG. 26 is an isometric view of a locking dog assembly according to an exemplary embodiment of the present disclosure.

### DETAILED DESCRIPTION

The present disclosure may be understood more readily by reference to the following detailed description of the disclosure taken in connection with the accompanying drawing figures, which form a part of this disclosure. It is to be understood that this disclosure is not limited to the specific devices, methods, conditions, or parameters described and/or shown herein, and that the terminology used herein is for the purpose of describing particular embodiments by way of example only and is not intended to be limiting of the claimed disclosure.

Also, as used in the specification and including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment. It is also understood that all spatial references, such as, for example, horizontal, vertical, top, upper, lower, bottom, left and right, are for illustrative purposes only and can be varied within the scope of the disclosure.

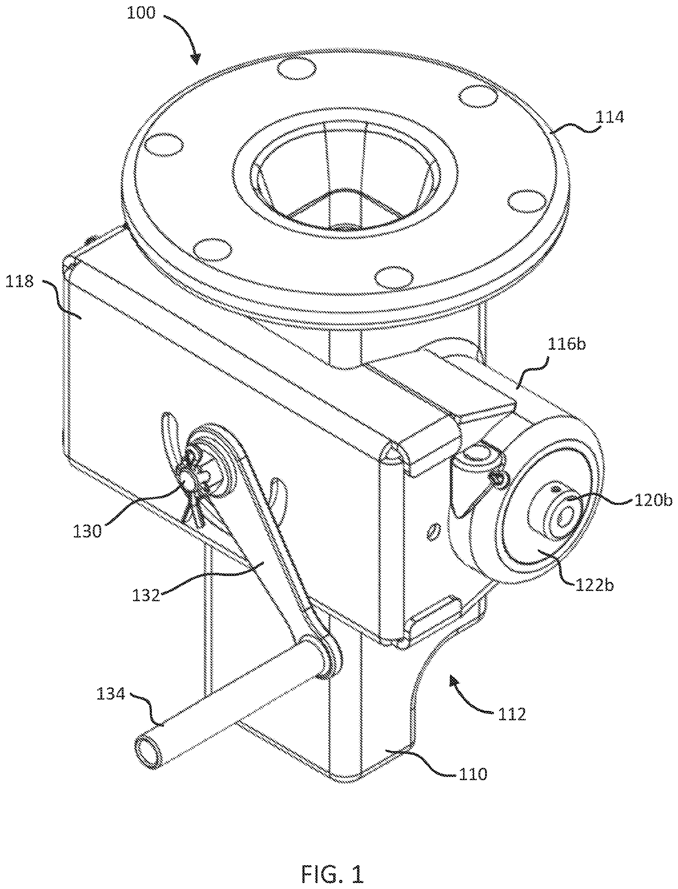

FIG. 1 shows a locking dog assembly 100 according to an exemplary embodiment of the present disclosure. The assembly 100 includes a tool body or body 110 with an inner cavity 112 having upper and/or lower openings. The assembly 100 further includes an upper flange 114 about the upper opening for attaching to and/or receiving a rotational force from a driver. In some embodiments, a torque indicator is secured to the upper flange 114. The torque indicator is then secured, directly or indirectly, to the driver.

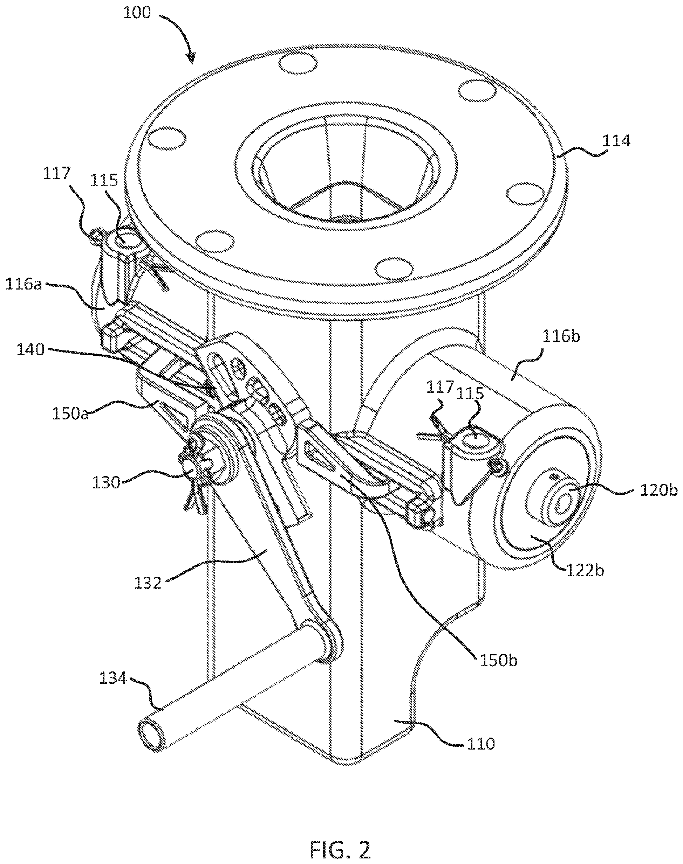

As shown in FIGS. 1 and 2, the tool body 110 includes orifices 116a,116b opening into the inner cavity 112 of the tool body 110. In the exemplary embodiment, the orifices 116a,116b are cylindrical cavities formed integrally with the body 110. The orifices 116a and 116b receive locking dogs 120a and 120b, respectively. In the exemplary embodiment, the locking dogs 120a,120b are positioned opposite to one another and translate into and out of the inner cavity 112 along a same locking dog axis. In other embodiments, the locking dogs 120a,120b may translate along different axes. As discussed in more detail below, the locking dogs 120a,120b may be biased with springs toward an engaged position into the inner cavity 112.

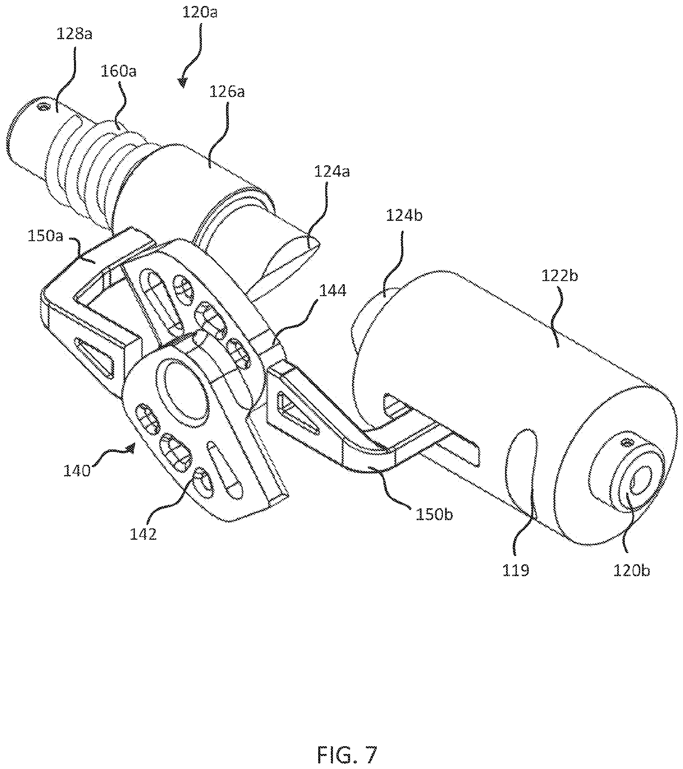

Each locking dog 120a,120b may be positioned within a respective locking dog housing 122a,122b. In the exemplary embodiment, the locking dog housings 122a and 112b are cylindrical and retained within the orifices 116a and 116b, respectively, via dowel pins 115 (see FIG. 2). Each dowel pin 115 extends at least partially into a hole in a side surface of a respective orifice 116a,116b and to engage a complementary surface 119 (see FIG. 7) on an exterior of a respective locking dog housing 122a and 122b and prevent axial and rotational movement of the locking dog housing 122a,122b. Cotter pins 117 may secure the dowel pins 115 in place. In some embodiments, the locking dog housings 122a,122b are integral to the tool body 110. The dowel pin retention of the locking dog housings disclosed in this application may be applied to many other tools having locking dogs or other similar elements and is not limited to use with the tools disclosed herein.

In the exemplary embodiment, the locking dog assembly 100 includes a rotatable lever 132 which may be actuated by hand or with a tool to simultaneously move the locking dogs 120a,120b outward toward their disengaged positions at least partially outside of the inner cavity 112 and back inward to their engaged positions. The lever 132 can advantageously be operated with one hand. FIG. 1 illustrates one exemplary embodiment of a lever 132 that is removably secured (e.g., using a nut and cotter pin) about a spindle 130 defining an axis. The lever 132 has a handle portion 134. In some embodiments, the locking dog assembly 100 is actuated hydraulically, pneumatically, and/or electrically with a motor or actuator.

As shown in FIG. 1, a cover 118 may be provided to conceal and protect, and/or protect users from, internal components of the locking dog assembly 100 as discussed in more detail below. FIG. 2 illustrates the locking dog assembly 100 with the cover 118 removed.

The locking dog assembly 100 includes a mechanism for simultaneous activation of the first and second locking dogs. The mechanism may be, but is not limited to, a cam assembly 140 rotatable about the spindle 130 defining a cam axis as shown in FIG. 2. The cam assembly 140 is actuated via the lever 132 to selectively displace each of the first and second locking dogs 120a,120b. First and second locking dog extensions 150a and 150b are coupled to the mechanism which, in this example, is the cam assembly 140. The first and second locking dog extensions 150a and 150b are adjacent to the cam assembly 140 and pressed against the cam assembly 140 via spring forces in the first and second locking dogs 120a,120b. In the exemplary embodiment, the cam assembly 140 acts simultaneously on first and second locking dog extensions 150a and 150b which in turn acts on the locking dogs 120a and 120b, respectively.

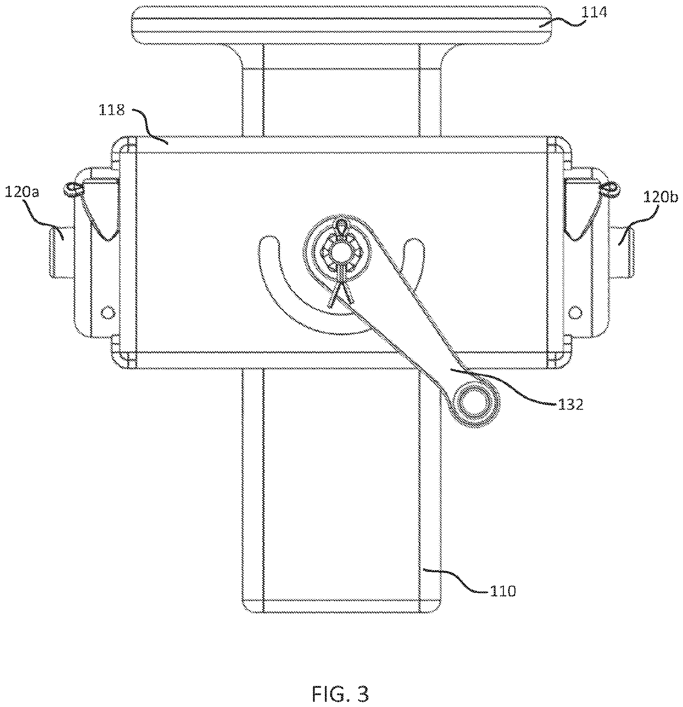

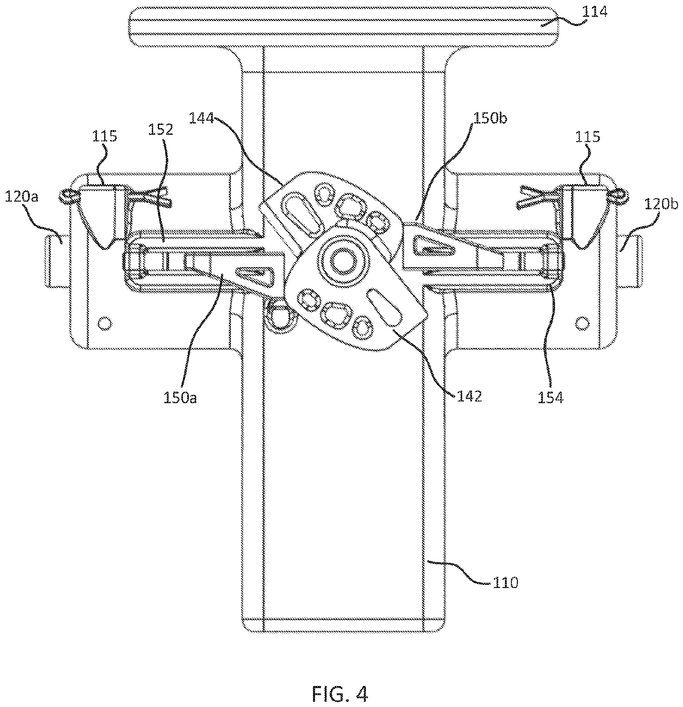

FIG. 3 is a front view of the locking dog assembly 100 with the cover 118 and FIG. 4 is a front view of the locking dog assembly 100 with the cover 118 and lever 132 removed. As shown in FIG. 4, the first and second locking dog extensions 150a,150b extend into the locking dog assembly 100 and are slidably retained in respective guide slots 152 and 154. The cam assembly 140 may include a first cam 142 and a second cam 144. In the exemplary embodiment, the first cam 142 is positioned outboard on the spindle 130 and interacts with the first locking dog extension 150a. The second cam 144 is positioned inboard on the spindle 130 and interacts with the second locking dog extension 150b.

In FIGS. 3 and 4, the cam assembly 140 is shown in a rest or engaged position whereby the locking dogs 120a,120b are engaged in the inner cavity 112. In the exemplary embodiment, the locking dogs 120a,120b are biased inward toward their engaged positions by springs. The first and second cams 142,144 may each include multiple cam surfaces or positions to enable selective positioning of the locking dogs 120a,120b. In some embodiments, there are two positions. In the exemplary embodiment, there are three positions including the engaged (inward) position, an intermediate position, and a disengaged (outward) position.

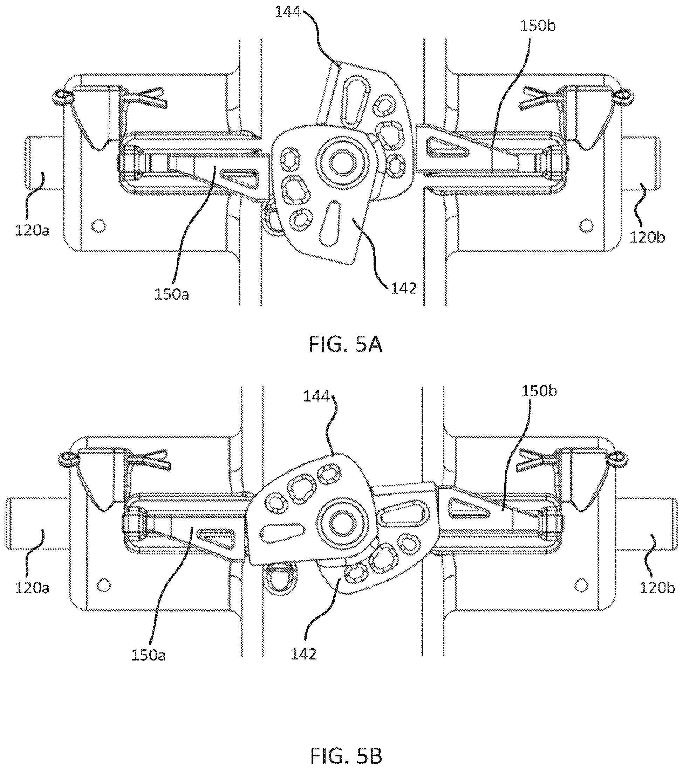

FIGS. 5A and 5B illustrate how the cam assembly 140 may rotate (e.g., by means of the lever 132) to disengage the locking dogs 120a,120b. FIG. 5A shows the cam assembly 140 in the intermediate position having been rotated (e.g., clockwise) and having pushed the locking dogs 120a,120b outward (e.g., against springs) to partially disengage them from the inner cavity 112. The cam assembly 140 includes a surface which provides a secure detent at the intermediate position. Continuing to rotate the cam assembly 140 further moves the locking dogs 120a,120b outward. FIG. 5B shows the cam assembly 140 rotated further to the disengaged position such that the locking dogs 120a,120b are pushed fully (or almost fully) outward from the inner cavity 112.

As shown in FIG. 5B, the cams 142,144 may have flat distal surfaces which contact the locking dog extensions 150a,150b in the disengaged position. This provides a secure detent at the disengaged position. To reengage the locking dogs 120a,120b, the operator may rotate the lever 132 against the spring resistance far enough that the cams 142,144 are beyond the position where the locking dogs 120a,120b are at their maximum outward position. After this point, the spring force pushes the dogs 120a,120b in and rotates the cams 142,144 and lever 132 automatically to the engaged position. The length of the lever 132 and cam-actuated disengagement of the locking dogs 120a,120b provide the operator with mechanical advantage to overcome binding force on the locking dogs 120a,120b.

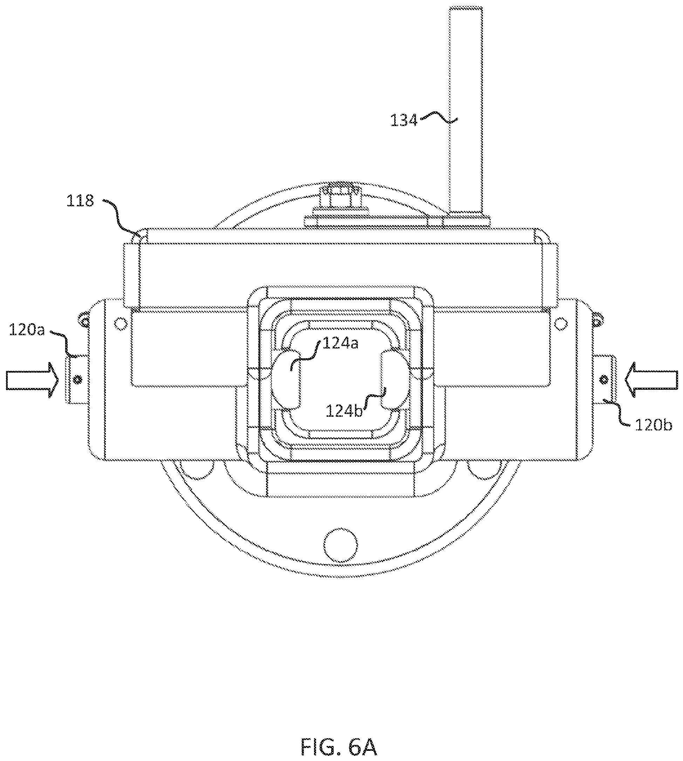

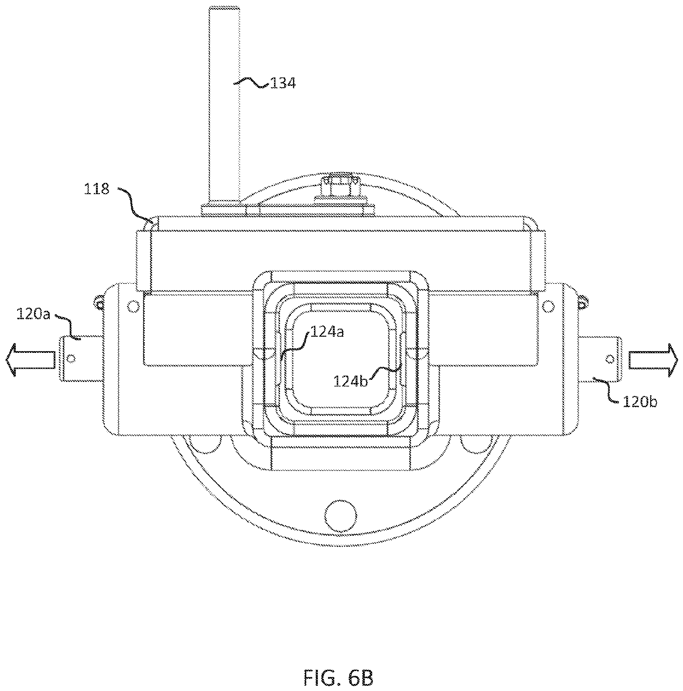

FIGS. 6A and 6B are bottom views of the locking dog assembly 100. In FIG. 6A, the lever 132 is in an engaged position and the locking dogs 120a,120b are engaged (as if bearing against an inserted anchor assembly). Proximal ends 124a and 124b of the locking dogs 120a and 120b, respectively, are extended into the inner cavity 112 to retain an anchor and/or drive wrench in the inner cavity 112. In FIG. 6B, the lever 132 is rotated such that the locking dogs 120a,120b are fully (or close to fully) disengaged. Proximal ends 124a and 124b of the locking dogs 120a and 120b, respectively, are retracted from the inner cavity 112 to release an anchor and/or drive wrench from the inner cavity 112.

FIG. 7 shows the cam assembly 140 and locking dogs 120a,120b of the locking dog assembly 100. For purposes of illustration, the first locking dog 120a is shown without its housing 122a and the second locking dog 120b is shown in its housing 122b. Each locking dog 122a,122b has a proximal end or surface 124a,124b, a central portion 126a,126b, and a distal portion 128a,128b. The central portion 126a,126b has a greater diameter than the distal portion 128a,128b and/or the proximal end 124a,124b. The first and second locking dog extensions 150a,150b extend through slots on the exterior of the respective housings 122a,122a and connect to the respective locking dogs 120a,120b. In the exemplary embodiment, the locking dog extensions 150a,150b extend into the central portions 126a,126b of the locking dogs 120a,120b.

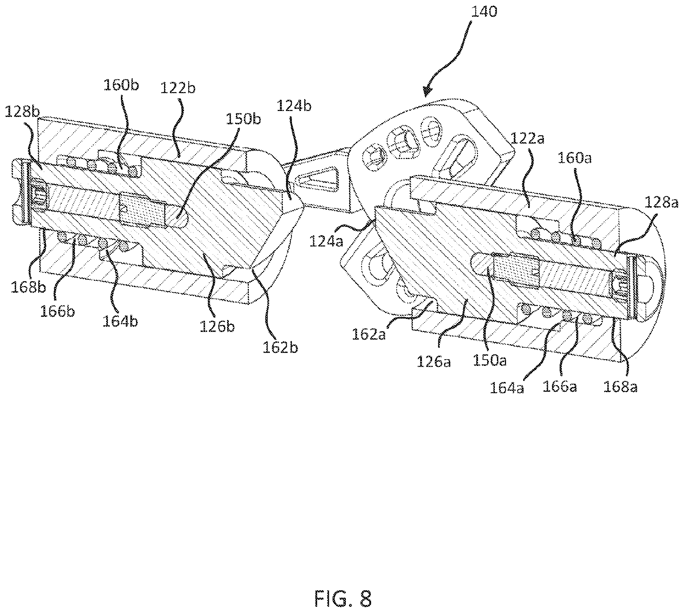

FIG. 8 is a rear sectional view of the cam assembly 140 and locking dogs 120a,120b. Each locking dog 120a,120b is retained within its respective locking dog housing 122a,122b together with a spring 160a,160b (see also FIG. 7). The locking dog housings 122a,122b each have a proximal cavity 162a,162b, a central cavity 166a,166b, with a step 164a,164b between the proximal cavity 162a,162b and the central cavity 166a,166b, and a distal cavity (or aperture) 168a,168b. The spring 160a,160b acts between a distal wall of the central cavity 166a,166b and a distal surface of the central portion 126a,126b of the locking dog 120a,120b.

The step 164a,164b functions as a solid locking dog stop to establish an outward limit for the travel of the locking dog 120a,120b when disengaging. In particular, the central cavity 166a,166b of the locking dog housing 122a,122b may have a length that is greater than a length of the spring 160a,160b when fully compressed. This arrangement advantageously protects the spring 160a,160b from being over-compressed and damaged, such as if a backlash were to occur. The locking dog stop disclosed in this application may be applied to many other tools having locking dogs or other similar elements and is not limited to use with the tools disclosed herein.

As shown in FIG. 8, the locking dog extensions 150a,150b may extend into receptacles or channels in the respective locking dogs 120a,120b. In the exemplary embodiment, distal ends of the locking dog extensions 150a,150b are retained in the locking dogs 120a,120b with a first set screw, a spacer, a second set screw, and a spring pin.

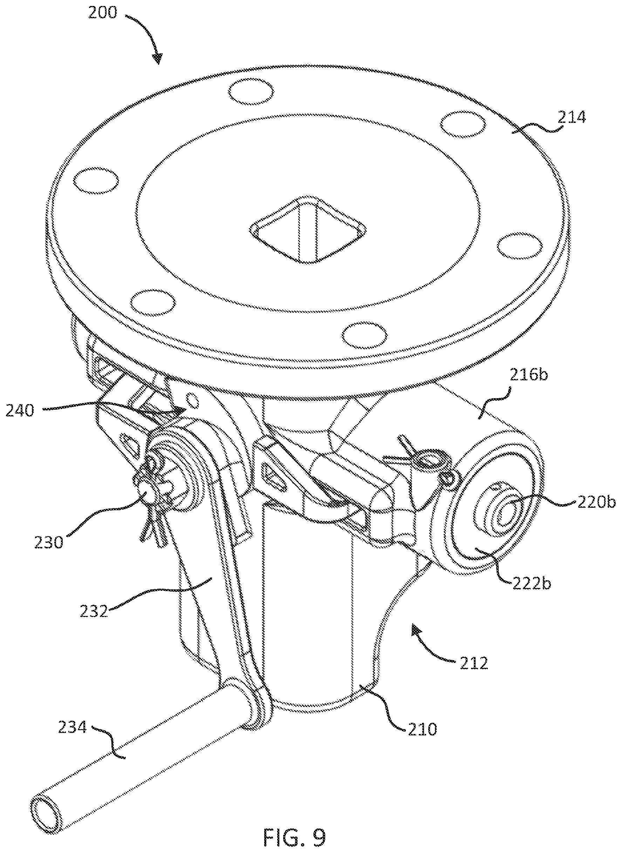

FIG. 9 is an isometric view of a locking dog assembly 200 according to an exemplary embodiment of the present disclosure. In the exemplary embodiment, the cover is removed or not provided. The locking dog assembly 200 has a smaller inner cavity 212 with smaller upper and/or lower openings to accommodate different applications. The locking dog assembly 200 also has a different cam assembly 240, though it may also be employed in the previous embodiment. The cam assembly 240 includes cams 242,244 shaped such that there is no intermediate position as may be desired for certain applications. Other mechanisms may also be used as described herein.

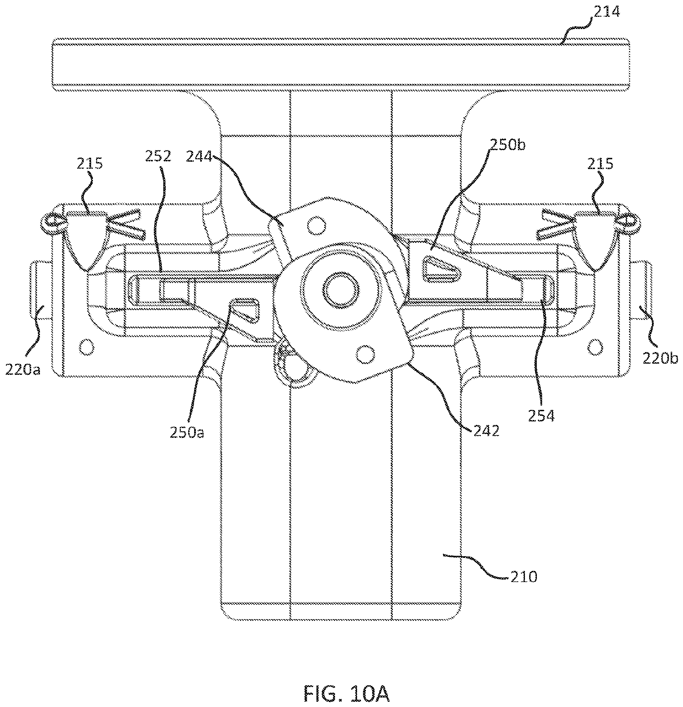

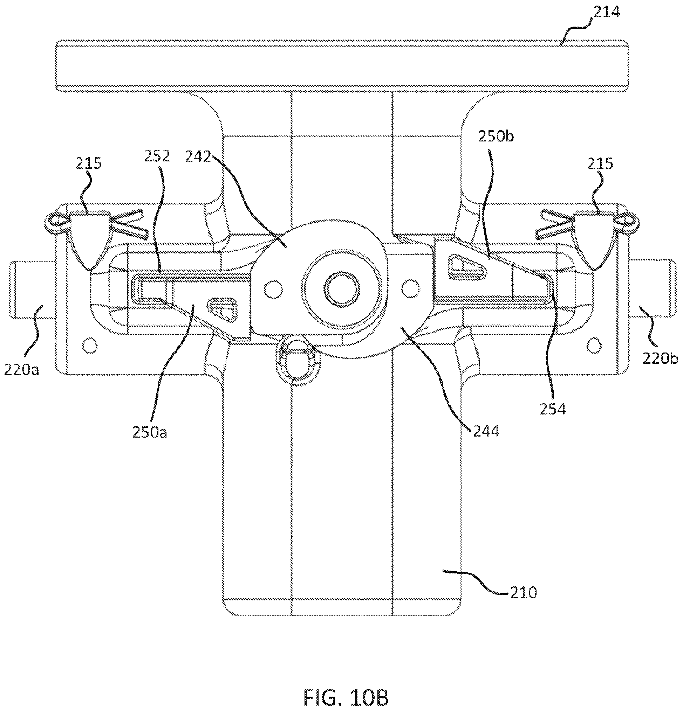

FIGS. 10A and 10B illustrate how the cam assembly 240 rotates to disengage the locking dogs 220a,220b. FIG. 10A shows the cam assembly 240 being rotated (e.g., clockwise) from an engaged position. FIG. 10B shows the cam assembly 240 rotated further to the disengaged position such that the locking dogs 220a,220b are pushed fully (or almost fully) outward from the inner cavity 212. As shown in FIG. 10B, the cams 242,244 have flat distal surfaces which contact the locking dog extensions 250a,250b in the disengaged position. As in the previous embodiment, this provides a secure detent at the disengaged position.

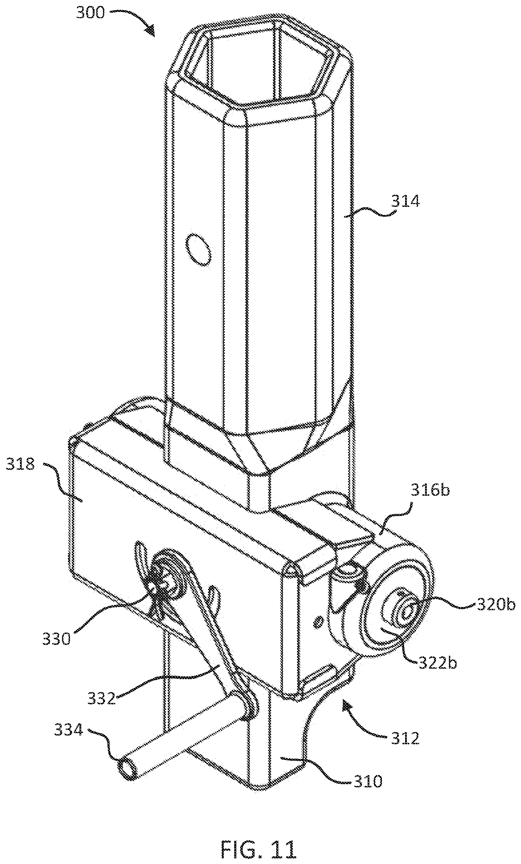

FIG. 11 is an isometric view of a locking dog assembly 300 according to an exemplary embodiment of the present disclosure. The assembly 300 includes a tool body or body 310 with an inner cavity 312 having upper and/or lower openings. Unlike the body 110 shown in FIG. 1, the body 310 includes an extended upper portion 314 including an integrated hex socket for attaching to a driver.

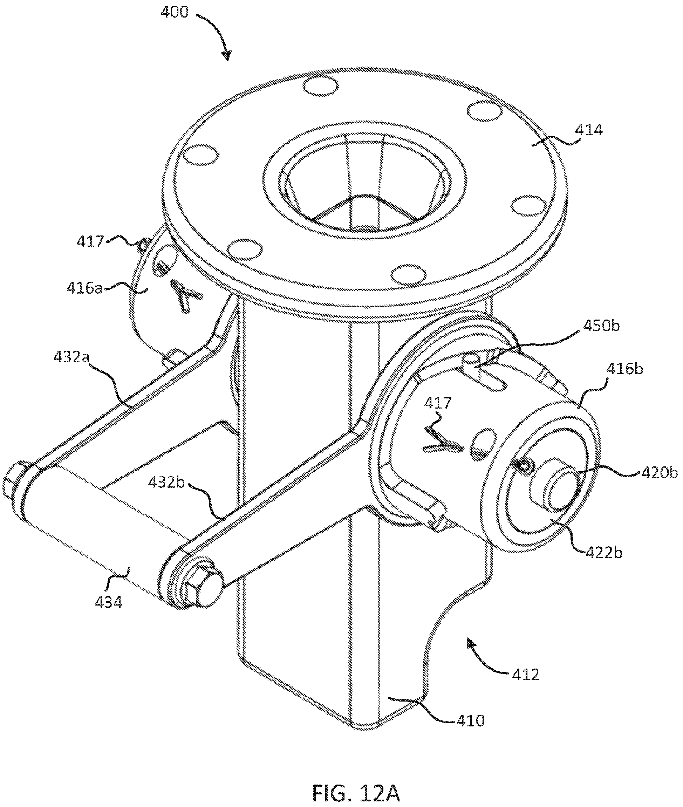

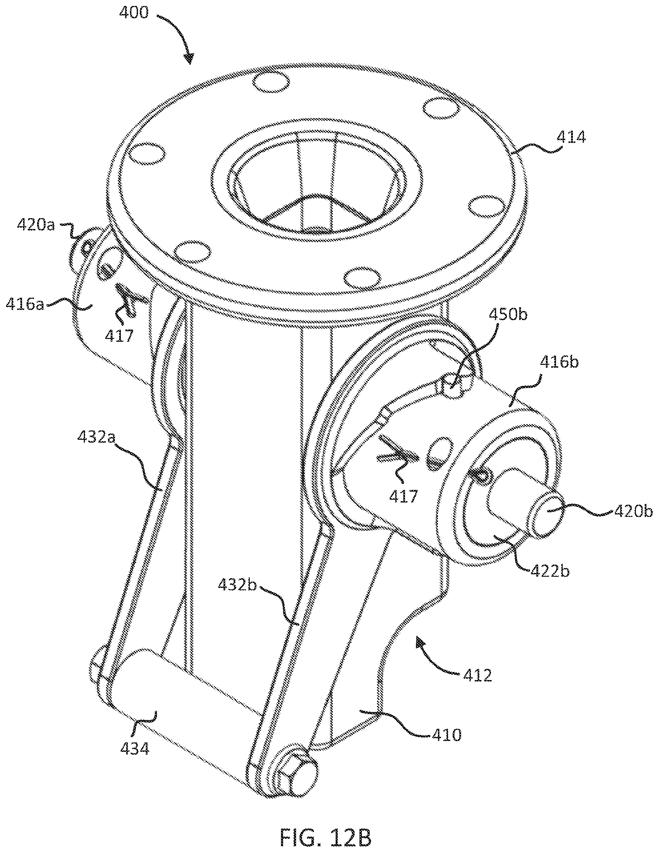

FIG. 12A is an isometric view of another locking dog assembly 400 according to an exemplary embodiment of the present disclosure with locking dogs 420a,420b in an engaged position. FIG. 12B is an isometric view of the locking dog assembly 400 with the locking dogs 420a,420b in a disengaged position. In this embodiment, the lever includes left and right lever components 432a,432b that are actuated up and down simultaneously via a connected handle 434 (e.g., with one hand) to disengage and engage the locking dogs 420a,420b. Locking dog extensions 450a,450b extend radially from the locking dogs 420a,420b, through slots in the orifices 416a,416b, and slide along ramps on cam portions of the lever components 432a,432b. Each locking dog extension 450a,450b may be a single piece extending through a respective locking dog, or two separate pieces with one piece attached to or formed integrally on each side of the respective locking dog. Each ramp may include a rest or full engagement position, an intermediate step for partial disengagement, and a final step (shown in FIG. 12B) for full disengagement.

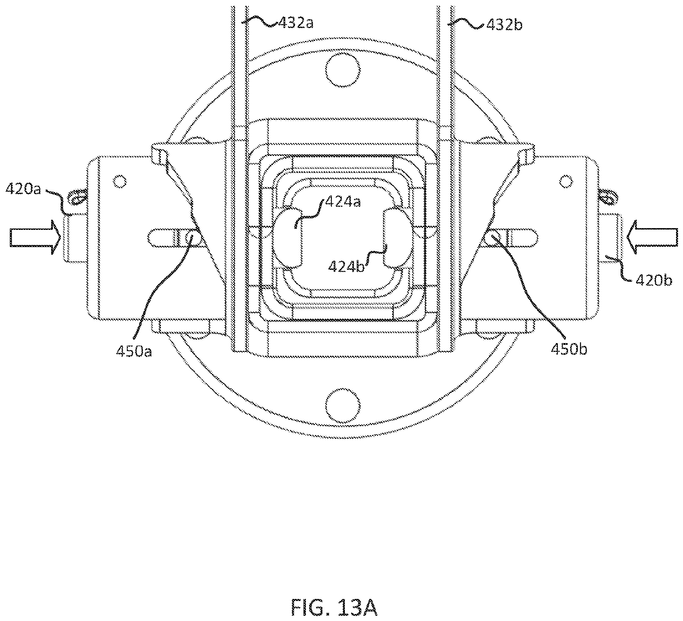

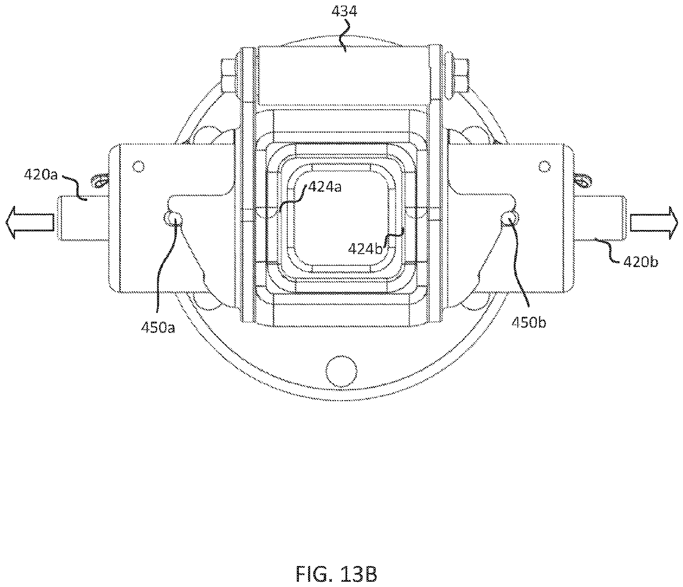

FIGS. 13A and 13B are bottom views of the locking dog assembly 400. In FIG. 13A, the lever 432a,432b is shown in a rest position and the locking dogs 420a and 420b are engaged (as if bearing against an inserted anchor assembly). Proximal ends 424a and 424b of the locking dogs 420a and 420b, respectively, are extended into the inner cavity 412 to retain an anchor and/or drive wrench in the inner cavity 412. In FIG. 13B, the lever 432a,432b is rotated such that the locking dogs 420a,420b are fully (or close to fully) disengaged. Proximal ends 424a and 424b of the locking dogs 420a and 420b, respectively, are retracted from the inner cavity 412 to release an anchor and/or drive wrench from the inner cavity 412.

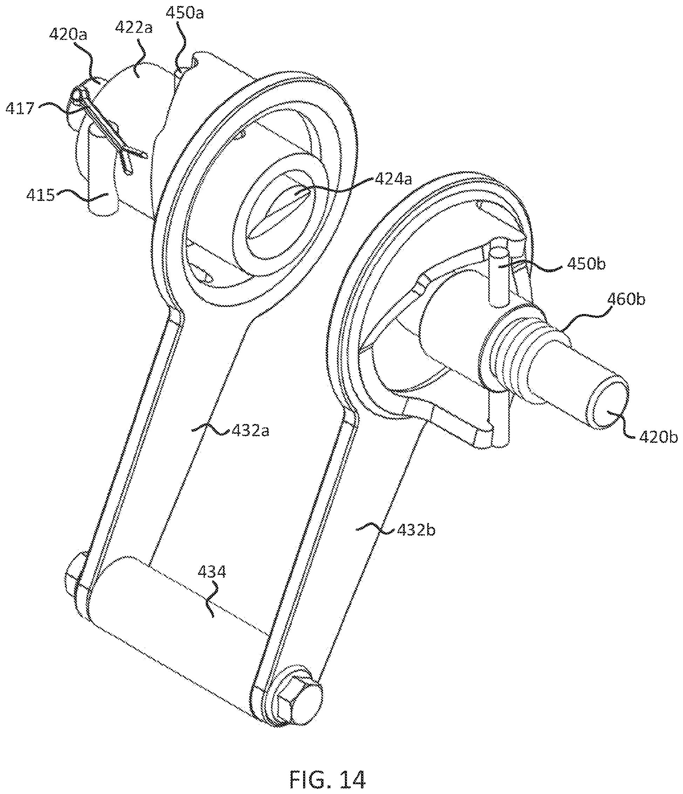

FIG. 14 is an isometric view of the lever 432a,432b and internal components of the locking dog assembly 400 shown in FIGS. 12A and 12B. Each lever component 432a,432b has a cam portion at its proximal end rotating about a cam axis. The cam axis may be the same axis along which the locking dogs 420a,420b translate into and out of the inner cavity 412. The locking dog extensions 450a,450b, which in this case are cylindrical members, extend through respective slots in the tops of the locking dog housings 422a,422b, through central portions of the locking dogs 420a and 420b, and out of respective slots in the bottoms of the locking dog housings 422a,422b. The locking dogs 420a,420b are biased inward using springs 460a,460b.

The locking dog housings 422a,422b may be retained in the orifices 416a,416b via dowel pins 415. Each dowel pin 415 engages a complementary surface on an exterior of a respective locking dog housing 422a,422b and prevents axial and rotational movement of the locking dog housing 422a,422b. Cotter pins 417, positioned above the dowel pins 415, may secure the dowel pins 415 in place.

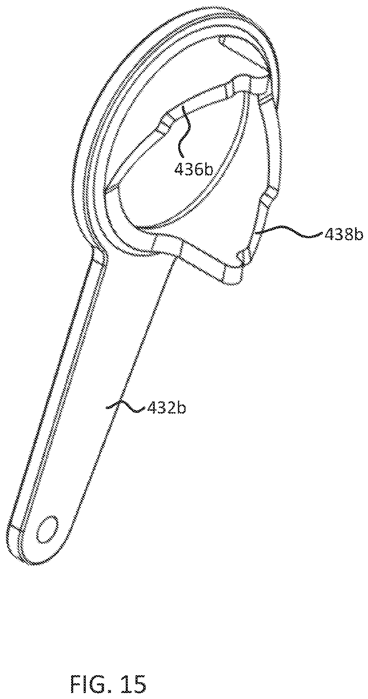

FIG. 15 is an isometric view of the lever component 432b of the locking dog assembly 400 shown in FIGS. 12A and 12B. Each lever component 432a,432b has a cam portion including ramps to engage the locking dog extensions 450a,450b. As shown in FIG. 15, the cam portion of the lever component 432b has two complementary ramps (e.g., each with two or three positions) whereby ramp 436b engages a top of the locking dog extension 450b and the ramp 438b engages a bottom of the locking dog extension 450b. The ramps 436a,436b and 438a,438b have intermediate detents and outer detents to retain the locking dog extension 450b at positions defined by such detents. Lever component 432a has a similar, albeit opposite, construction.

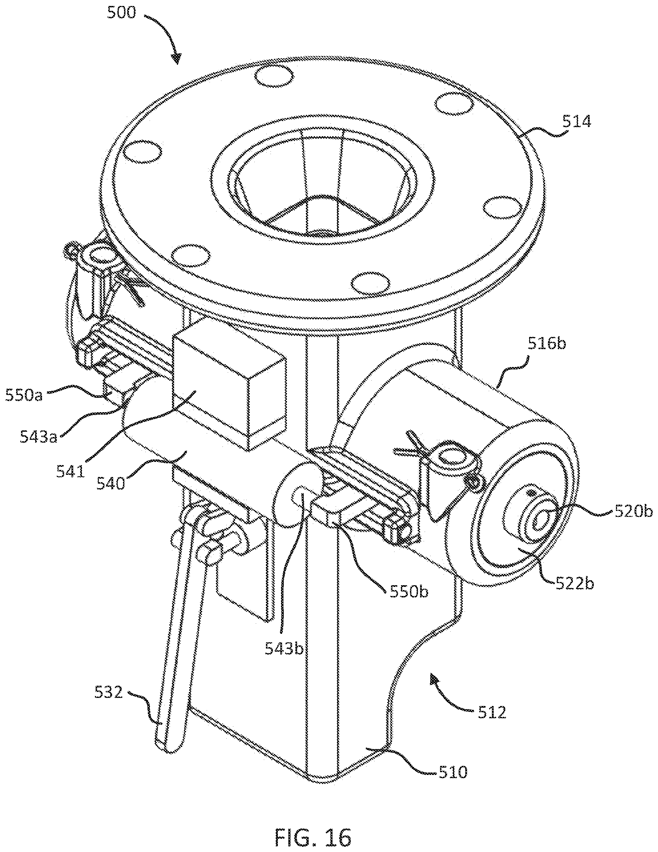

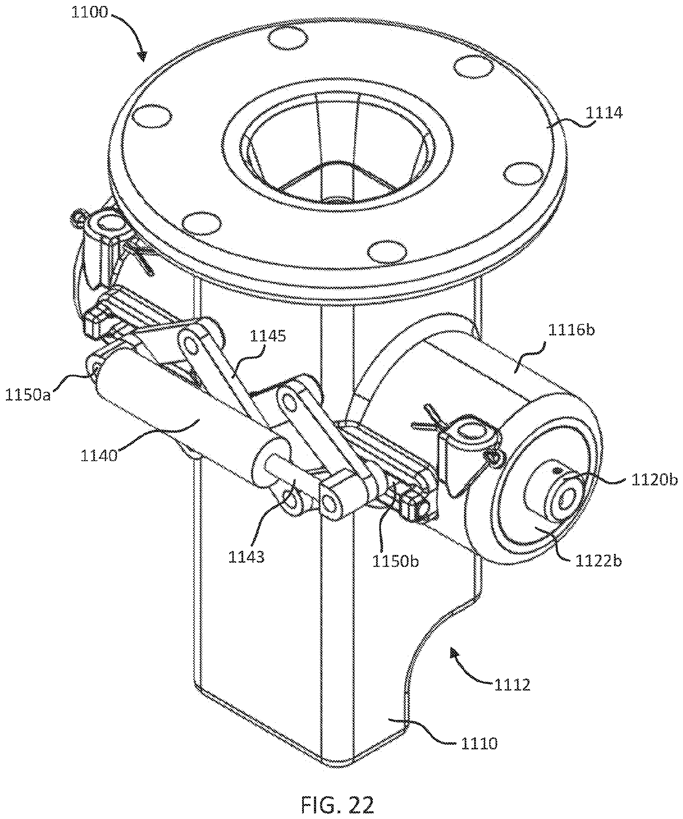

FIG. 16 is an isometric view of a locking dog assembly 500 according to an exemplary embodiment of the present disclosure. The assembly 500 includes a tool body or body 510 with an inner cavity 512 having upper and/or lower openings. The structure and features of the locking dog assembly 500 may be similar to the other examples described herein. However, in this example, the mechanism is a hydraulic mechanism including a hydraulic actuator 540 and a hydraulic fluid reservoir 541. The hydraulic actuator 540 is double sided including piston rods 543a,543b acting on locking dog extensions 550a,550b. The hydraulic mechanism is actuated using a pump and lever assembly 532. If only two locking dog positions are needed (engaged and retracted), the pump and cylinder of the actuator can be single chambers. If multiple positions are needed (including an intermediate position), the locking dog motion should be synchronized and therefore the pump and cylinder of the actuator should have dual chambers (operating in parallel). The hydraulic mechanism may alternatively have a single sided hydraulic actuator 1140 with a piston rod 1143 as shown in FIG. 22. The hydraulic mechanism may also include a scissor mechanism 1145 acting between and guiding locking dog extensions 1150a,1150b as shown in FIG. 22. A pump and lever assembly may also be included in the embodiment shown in FIG. 22. The actuator 1140 shown in FIG. 22 can alternatively be a pneumatic actuator or an electric actuator.

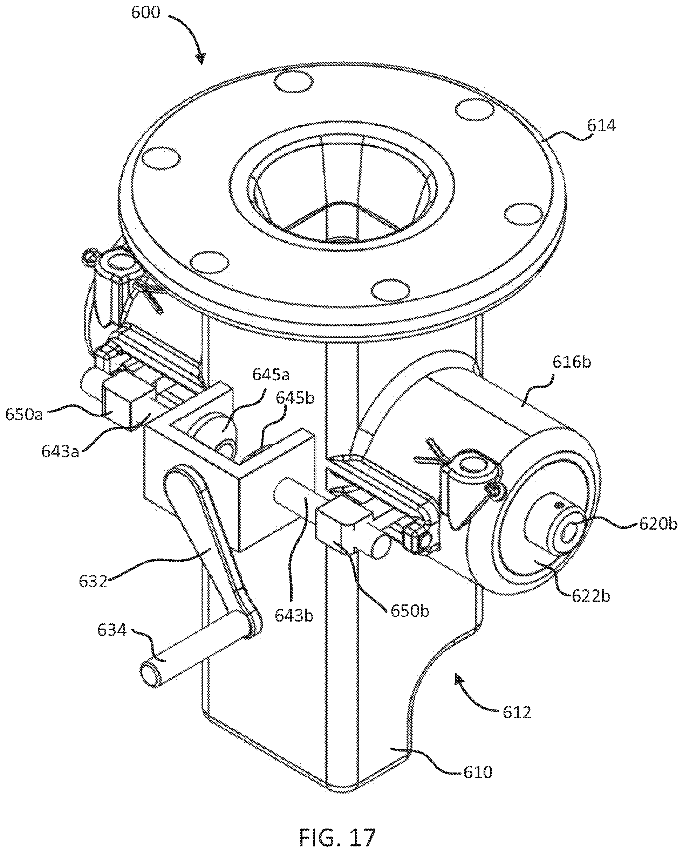

FIG. 17 is an isometric view of a locking dog assembly 600 according to an exemplary embodiment of the present disclosure. The assembly 600 includes a tool body or body 610 with an inner cavity 612 having upper and/or lower openings. The structure and features of the locking dog assembly 600 may be similar to the other examples described herein. However, in this example, the mechanism is a lead screw mechanism including screws 643a,643b. Each screw 643a,643b has a bevel gear 645a,645b at its proximal end and is threaded through a locking dog extension 650a,650b at its distal end. A lever 632 is provided and connected to an actuating bevel gear meshed with and driving the two bevel gears 645a,645b. The lead screw mechanism and in turn the screws 643a,643b are actuated using the lever 632. Rotation of the screws 643a,643b through the respective locking dog extensions 650a,650b moves the locking dog extensions 650a,650b. Alternatively, the lever 632 may be connected to a conical head rather than an actuating bevel gear and the screws 643a,643b may be replaced with unthreaded rods. Rotation of the lever 632 causes the conical head to translate towards the body 610 and act against circular followers on each unthreaded rod, thereby moving the locking dogs 620a,620b in a linear fashion.

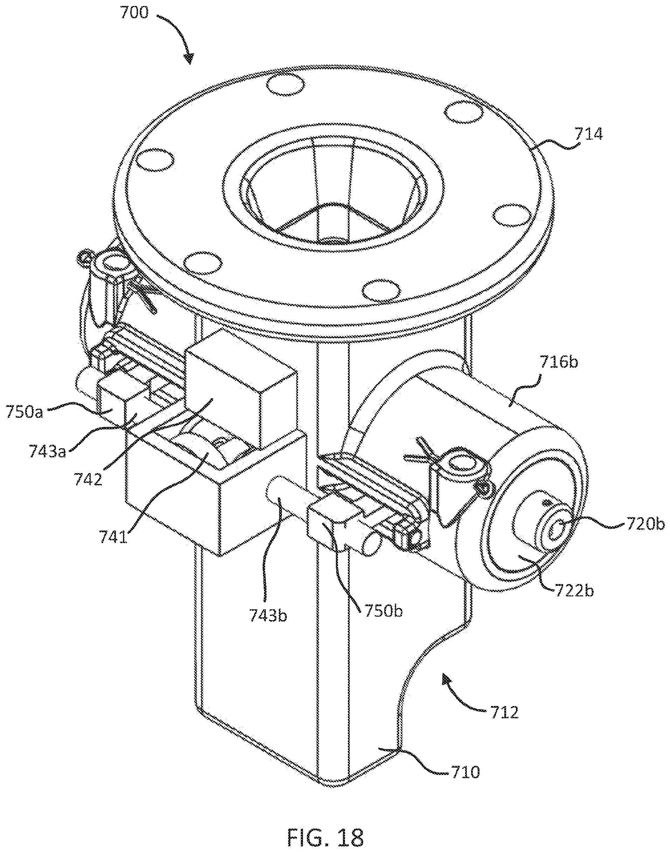

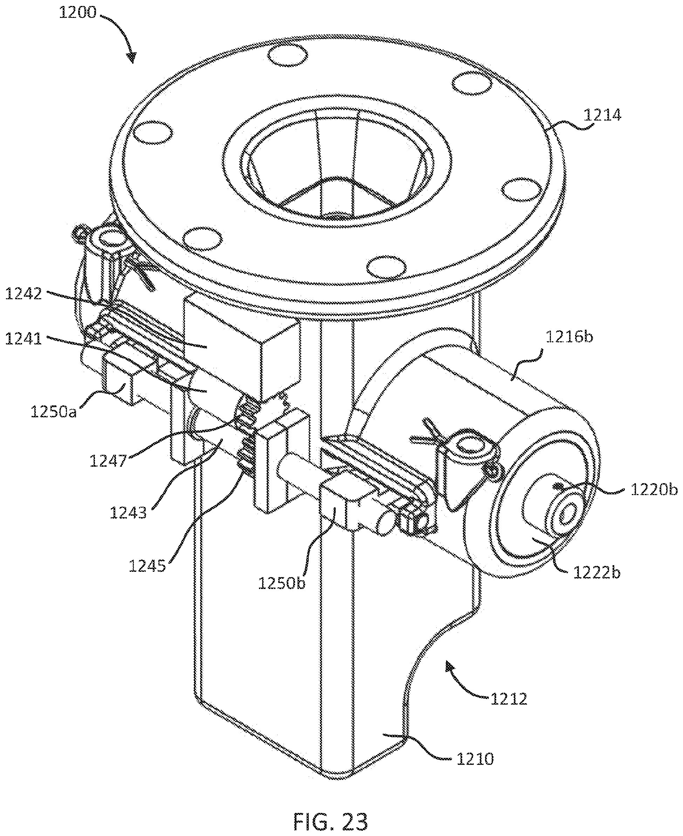

FIG. 18 is an isometric view of a locking dog assembly 700 according to an exemplary embodiment of the present disclosure. The assembly 700 includes a tool body or body 710 with an inner cavity 712 having upper and/or lower openings. The structure and features of the locking dog assembly 700 may be similar to the other examples described herein. Similar to the example shown in FIG. 17, the mechanism is a lead screw mechanism including screws 743a,743b. In this example, the lead screw mechanism is motorized using a motor 741 in communication with a control assembly 742, e.g., including a battery and electronics. The motor 741 drives an actuating bevel gear meshed with and driving the bevel gears on the proximal ends of the screws 743a,743b. The motor 741 may be, for example, an electric motor. Though the motor 741 is shown with a lead screw mechanism, the motor 741 can be used with any of the mechanisms described herein. As shown in FIG. 23, the lead screw mechanism can alternatively be arranged with a single screw 1243 having a spur gear 1245. In this embodiment, the spur gear 1245 is driven by a motor 1241 via another spur gear 1247. A control assembly 1242, e.g., including a battery and electronics, is in communication with the motor 1241.

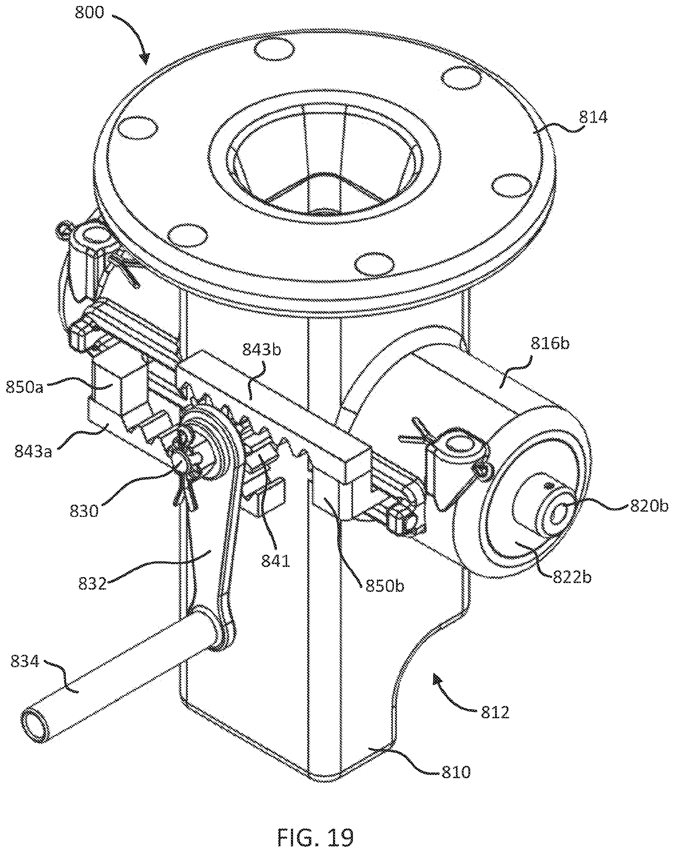

FIG. 19 is an isometric view of a locking dog assembly 800 according to an exemplary embodiment of the present disclosure. The assembly 800 includes a tool body or body 810 with an inner cavity 812 having upper and/or lower openings. The structure and features of the locking dog assembly 800 may be similar to the other examples described herein. However, in this example, the mechanism is a rack and pinion mechanism. The mechanism includes a pinion 841 secured about a spindle 830 rotatable by means of a lever 832. In other embodiments, the pinion 841 is rotatable with a motor. The pinion 841 engages with racks 843a,843b secured to locking dog extensions 850a,850b, respectively. Rotation of the pinion 841 (e.g., clockwise) causes the racks 843a,843b to move outward which in turn moves the locking dog extensions 850a,850b and locking dogs 820a,820b outward.

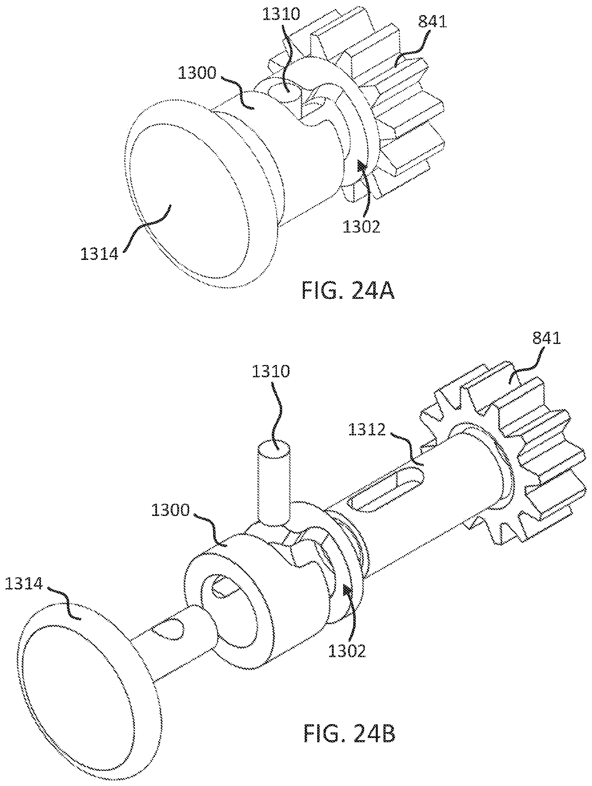

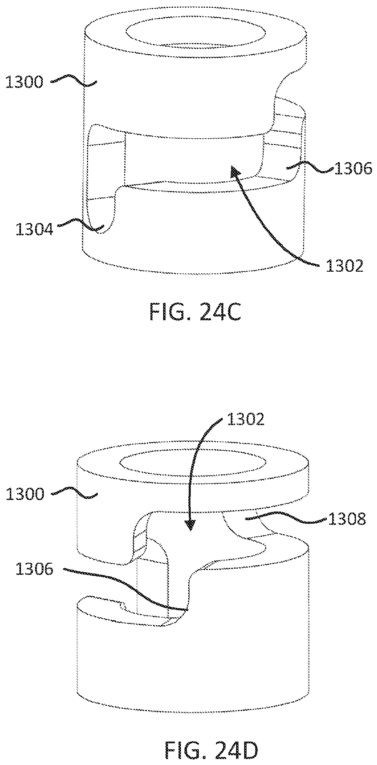

In some embodiments, the locking dog assembly 800 includes a retention feature to hold the locking dogs 820a,820b in the intermediate (if included) and retracted (outward) positions. For example, the retention feature may include a drum, pin, and plunger mechanism. In some embodiments, the mechanism includes a cylindrical drum 1300 coaxial with and integral with or attached to the pinion 841 as shown in FIGS. 24A-24D. In the exemplary embodiment, the drum 1300 has a stepped track 1302 cut therethrough with steps corresponding to angular positions of the drum 1300 when the locking dogs 820a,820b are in the retracted position(s). In the exemplary embodiment, the stepped track 1302 includes a first step 1304 (e.g., at the fully retracted position), a second step 1306 (e.g., at an intermediate position), and a fully engaged portion 1308. The retention feature includes a locking pin 1310 extending through the stepped track 1302, a tool body spindle 1312, and a plunger 1314. The locking pin 1310 may be oriented perpendicular to a rotational axis of the drum 1300. The plunger 1314 may be a spring-loaded plunger coaxial with the drum 1300 and moving axially inside the tool body spindle 1312. The spring pushes the locking pin 1310 into the steps in the stepped track 1302 as it rotates (e.g., clockwise). This prevents rotation in the opposite direction past the step until the plunger 1314 is pushed in against the spring and the locking pin 1310 is disengaged from the step. In other embodiments, the mechanism includes a spring catch or catches mounted on the tool body that push down under the handle as it rotates past (e.g., clockwise) and engage behind the handle after it passes. Catches are located to correspond with the locking dog intermediate (if included) and retracted positions. The catch is depressed to allow the handle to rotate back (e.g., counterclockwise).

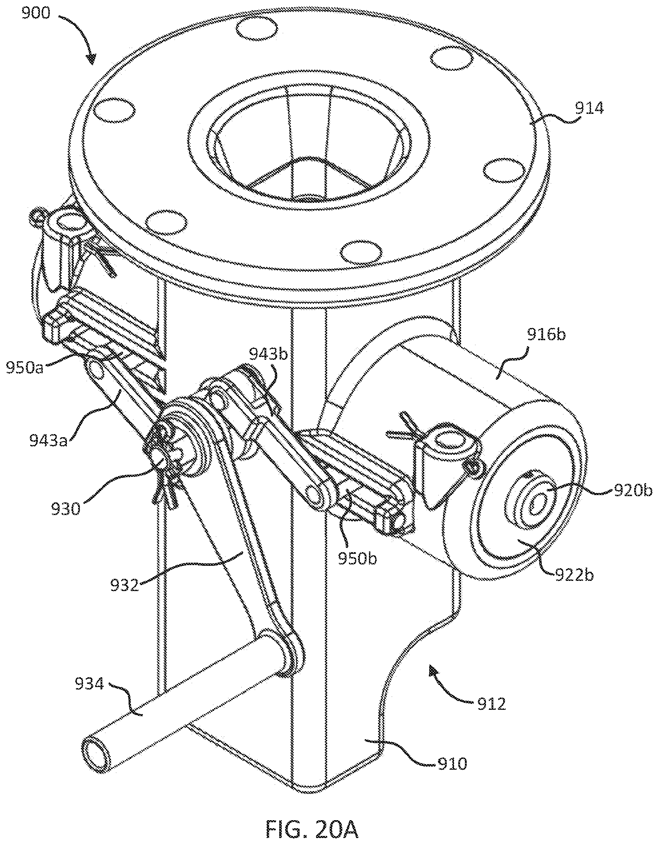

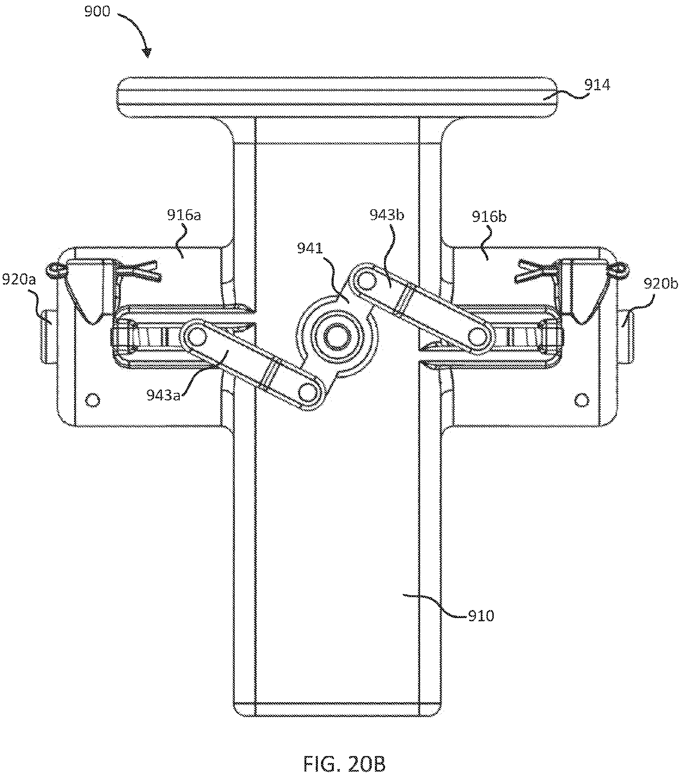

FIG. 20A is an isometric view of a locking dog assembly 900 according to an exemplary embodiment of the present disclosure. FIG. 20B is a front view of the locking dog assembly 900 with a lever 932 removed for clarity. The assembly 900 includes a tool body or body 910 with an inner cavity 912 having upper and/or lower openings. The structure and features of the locking dog assembly 900 may be similar to the other examples described herein. However, in this example, the mechanism is a crank and rod mechanism. The mechanism includes the lever 932 actuating a crank 941 secured about a spindle 930. In other embodiments, the crank 941 is rotatable with a motor. A first rod 943a is rotatably secured between the crank 941 and a first locking dog extension 950a. A second rod 943b is rotatably secured between the crank 941 and a second locking dog extension 950b. Rotation of the crank 941 (e.g., clockwise) causes the rods 943a,943b to move the locking dog extensions 950a,950b and the locking dogs 920a,920b outward. In some embodiments, the locking dog assembly 900 includes a retention feature (e.g., as discussed above) interfacing with the crank 941 or lever 932 to hold the locking dogs 920a,920b in the intermediate (if included) and retracted (outward) positions.

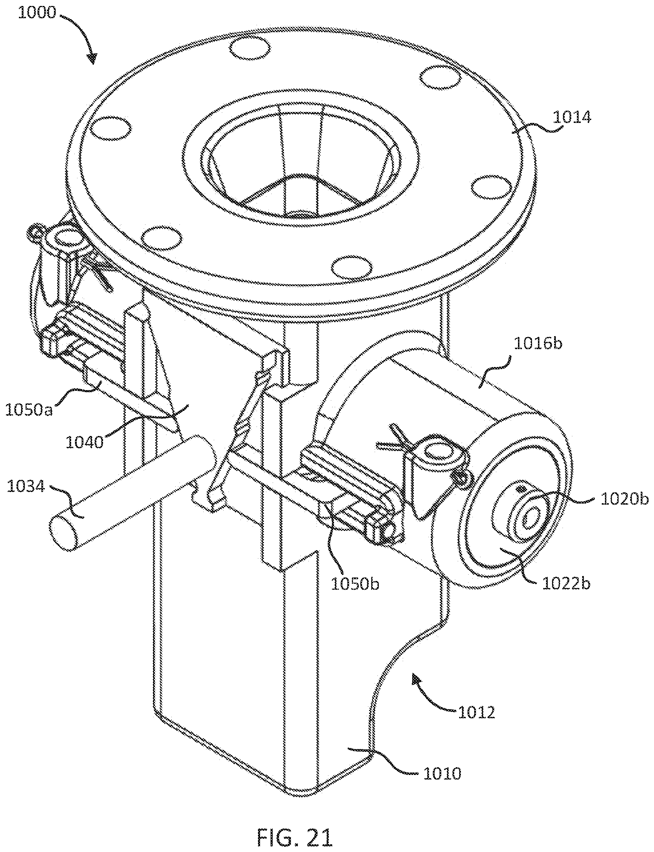

FIG. 21 is an isometric view of a locking dog assembly 1000 according to an exemplary embodiment of the present disclosure. The assembly 1000 includes a tool body or body 1010 with an inner cavity 1012 having upper and/or lower openings. The structure and features of the locking dog assembly 1000 may be similar to the other examples described herein. However, in this example, the mechanism is a sliding cam 1040. The sliding cam 1040 is slidably secured between two channels on an exterior of the body 1010. The sliding cam 1040 is actuated up and down using a handle 1034. The sliding cam 1040 includes two or more sets of corresponding detents or notches positioned at different widths on each side to receive locking dog extensions 1050a,1050b and position the locking dogs 1020a,1020b.

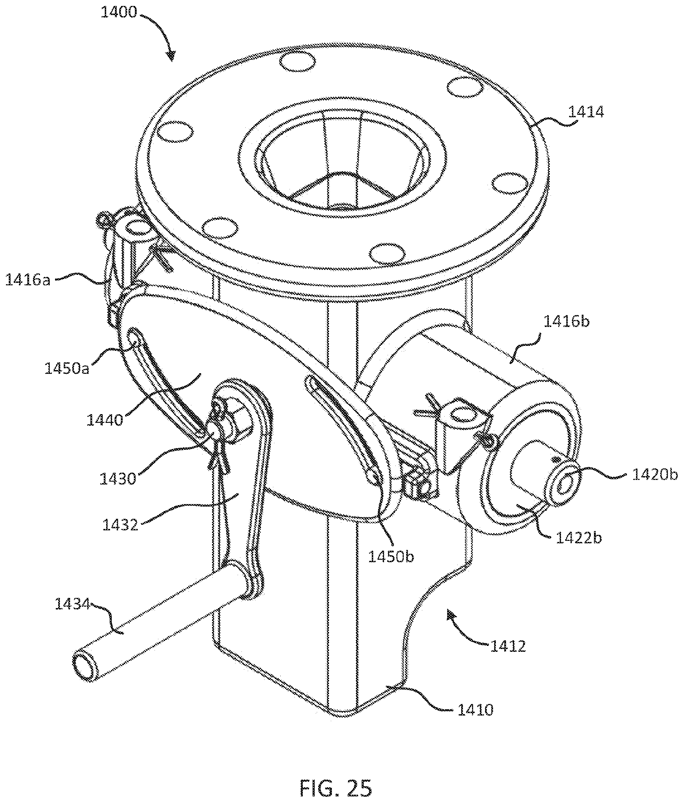

FIG. 25 shows a locking dog assembly 1400 according to an exemplary embodiment of the present disclosure. Similar to the locking dog assembly 100 shown in FIGS. 1-8, the assembly 1400 includes a tool body 1410 with an inner cavity 1412 and an upper flange 1414. The tool body 1410 includes orifices 1416a,1416b, opening into the inner cavity 1412, configured to receive locking dogs 1420a and 1420b, respectively. The locking dogs 1420a,1420b may be biased with springs toward an engaged position into the inner cavity 1412 (see, e.g., FIGS 7-8).

The locking dog assembly 1400 includes a rotatable lever 1432 which may be actuated by hand or with a tool to simultaneously move the locking dogs 1420a,1420b outward toward their disengaged positions at least partially outside of the inner cavity 1412 and back inward to their engaged positions. The lever 1432 is removably secured about a spindle 1430 defining an axis. The lever 1432 has a handle portion 1434.

As shown in FIG. 25, the mechanism for simultaneous activation of the first and second locking dogs includes a cam assembly 1440 rotatable about the spindle 1430 and actuated via the lever 1432. The cam 1440 is comprised of an oval shaped component with two closed tracks for receiving and actuating first and second locking dog extensions 1450a and 1450b. The tracks may include detent locations for intermediate and/or fully disengaged positions (e.g., as described above with respect to FIGS. 5A-5B, 10A-10B, 15, and/or 21) or may include a retention feature as discussed above (e.g., para. 0094 and 0095) and as shown in FIGS. 24A-24D.

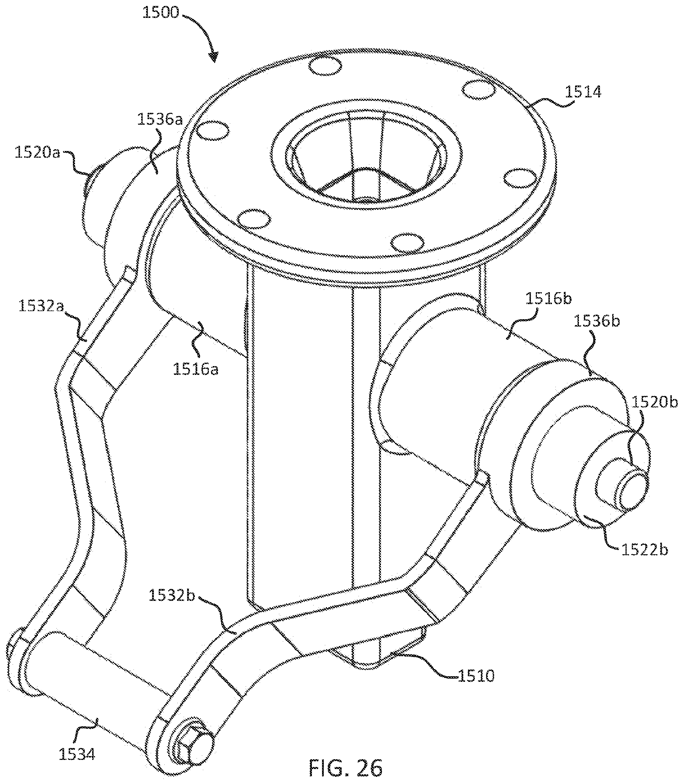

FIG. 26 is an isometric view of another locking dog assembly 1500 according to an exemplary embodiment of the present disclosure. Similar to the locking dog assembly 400 shown in FIGS. 12A-15, the locking dog assembly 1500 includes locking dogs 1520a,1520b actuated by a lever with left and right lever components 1532a,1532b that are actuated up and down simultaneously via a connected handle 1534.

The locking dog assembly 1500 includes locking dogs 1520a,1520b that may be positioned within or formed integrally with locking dog housings 1522a,1522b. Each lever component 1532a,1532b has a base 1536a,1536b circumscribing a respective one of the locking dog housings 1522a,1522b. An internal surface of each base 1536a,1536b is threaded and a corresponding exterior surface of each locking dog housing 1522a,1522b is threaded (not shown). The threads are opposite of one another on each side of the locking dog assembly 1500 such that rotation of the lever causes each locking dog housing 1522a,1522b and/or locking dog 1520a,1520b to move inward and outward by rotation of the lever.

The mechanisms described above are only exemplary and are not intended to be limiting. Other means to simultaneously activate first and second locking dogs may also be used in place of or in combination. For example, the mechanism may be a cable loop mechanism including a cable looped around a central drum on the tool body and pulleys positioned near the ends of the locking dog housings. The central drum may be rotated (by hand or a motor) to drive the cable. The cable may be fastened to the locking dog extensions (e.g., between the central drum and pulleys) such that the locking dogs are pulled outward when the cable rotates. A mechanism to hold the locking dogs at the disengaged location(s) may interface with the central drum or an operating handle. Similarly, a chain loop mechanism may be used having a chain in place of the cable and sprockets in place of the central drum and pulleys.

Alternatively, the mechanism may include a central drum with two cables wrapped at least partially around the central drum. A distal end of each cable may be attached to and/or inside of a respective locking dog. When the central drum is rotated, the cables are tensioned to pull the locking dogs outward. In some embodiments, the locking dog shanks (distal sections) are slotted along their vertical center planes to provide channels for the cable housings when the dogs are pulled out. A mechanism to hold the locking dogs at the disengaged location(s) may interface with the central drum or operating handle.

In other embodiments, the linkage mechanism may include a scissor jack that pushes locking dogs outward out via locking dog extensions. The mechanism may be driven by a threaded rod (e.g., vertically disposed on the tool body) that pulls central pivots of the scissor jack together. One end of the threaded rod may be right-handed thread and the other end left-handed thread. The mechanism may alternatively be driven by a cable that pulls the central pivots of the scissor mechanism together. A mechanism to hold the locking dogs at the disengaged location(s) may interface with the cable or linkage.

In other embodiments, the mechanism may include one or more solenoids to push the locking dogs outward. This may be particularly useful for tools with only two locking dog positions (engaged and disengaged), but it is not limited thereto. The solenoids may be mounted externally on the tool body and push the locking dogs outward via locking dog extensions. Alternatively, the solenoids may be integrated with the locking dogs (e.g., such that the locking dog shank [distal section] is the solenoid stem) or may be attached coaxially with the locking dogs rather than acting on locking dog extensions.

As shown throughout the drawings, like reference numerals designate like or corresponding parts. While illustrative embodiments of the present disclosure have been described and illustrated above, it should be understood that these are exemplary of the disclosure and are not to be considered as limiting. The scope of protection of the current invention is defined by the amended claims.

## Claims

1. A locking dog assembly (100), comprising:
a body (110) including inner cavity (112) with a lower opening, a first cylindrical cavity (116a) on a first side of the body (110), and a second cylindrical cavity (116b) on a second side of the body (110) opposite the first side;
a first locking dog (120a) in the first cylindrical cavity (116a) at least partially extending through the first side of the body (110) and displaceable into and out of the inner cavity (112);
a second locking dog (120b) in the second cylindrical cavity (116b) at least partially extending through the second side of the body (110), and displaceable into and out of the inner cavity (112);
a mechanism (140) for simultaneous displacement of the first and second locking dogs (120a, 120b) with mechanical advantage; **characterized by** a first locking dog extension (150a) having a first end extending through a slot (152) in a curved side
of the first cylindrical cavity (116a) and connected to the first locking dog (120a) and a second end coupled to the mechanism (140), wherein the mechanism (140) displaces the first locking dog (120a) via the first locking dog extension (150a); and
a second locking dog extension (150b) having a first end extending through a slot (154) in a curved side
of the second cylindrical cavity (116b) and connected to the second locking dog (120b) and a second end coupled to the mechanism (140), wherein the mechanism (140) displaces the second locking dog (120b) via the second locking dog extension (150b).

2. The locking dog assembly of claim 1, wherein the mechanism (140) includes a cam assembly rotatable about a cam axis (130), the cam assembly (140) selectively displacing each of the first and second locking dogs (120a, 120b) simultaneously upon rotation, the locking dog assembly further comprising a lever (132) on an exterior of the body (110) to actuate the cam assembly (140), wherein the lever (132) is rotatably about the cam axis (130).

3. The assembly of claim 1, wherein the mechanism includes a cam assembly (140) rotatable about a cam axis (130), the cam assembly (140) selectively displacing each of the first and second locking dogs (120a, 120b) simultaneously upon rotation, and wherein the cam assembly (140) includes a first cam (142) displacing the first locking dog (120a) and a second cam (144) displacing the second locking dog (120b).

4. The assembly of claim 1,
wherein the first locking dog extension (150a) extends through or is formed integrally with the first locking dog (120a) and has two opposite ends each engaged with the mechanism (40); and
wherein the second locking dog extension (150b) extends through or is formed integrally with the second locking dog (120b) and has two opposite ends each engaged with the mechanism (40).

5. The assembly of claim 1, wherein the mechanism (140) includes an actuator (1140) and scissor mechanism (1145), each positioned between the first locking dog extension (1150a) engaged with the first locking dog (1120a) and the second locking dog extension (1150b) engaged with the second locking dog (1120b).

6. The assembly of claim 1, wherein the mechanism (140) is a lead screw mechanism (743a, 743b) including at least one screw (743a, 743b) displacing the first and second locking dogs (720a, 720b), the at least one screw (743a, 743b) having at least one gear (745a, 745b) simultaneously driven by an actuating gear,
wherein the at least one screw includes a first screw (743a) displacing the first locking dog (720a) and a second screw displacing the second locking dog (720b), each of the first and second screws (743a, 743b) having a gear (745a, 745b) on a proximal end simultaneously driven by an actuating gear (732), or
wherein the assembly further comprises a motor (741) driving the actuating gear.

7. The assembly of claim 1, wherein the mechanism is one of:
a) a rack and pinion mechanism including a pinion (841), a first rack (843a) displacing the first locking dog (820a), and a second rack (843b) displacing the second locking dog (820b);
b) a crank and rod mechanism including a crank (941), a first rod (943a) rotatably secured to the crank (941) and displacing the first locking dog (920a), and a second rod (943b) rotatably secured to the crank (941) and displacing the second locking dog (920b); or
c) a sliding cam (1040) actuated up and down via a handle (1034).

8. The assembly of claim 1, wherein the first and second locking dogs (120a, 120b) are both displaceable along a locking dog axis, wherein the mechanism (40) includes a cam assembly rotatable about a cam axis (130), wherein the cam axis is the locking dog axis (130) or is perpendicular to the locking dog axis.

9. The assembly of claim 1, wherein each of the first and second locking dogs (120a, 120b) are spring biased towards the inner cavity (112), further comprising a first housing comprising the first locking dog (120a) and a first spring, and a second housing comprising the second locking dog (120b) and a second spring.

10. The assembly of claim 9, wherein the first housing (122a) is removably secured in the first cylindrical cavity (112) on the first side of the body (110) and the second housing (122b) is removably secured the second cylindrical cavity (112) on the second side of the body (110).

11. The assembly of claim 10, wherein each of the first and second housings (112a, 112b) are removably secured in the first and second openings (116a, 116b), respectively, via a dowel pin (115) engaging against a complementary surface on the respective first or second housing (122a, 122b) and preventing axial and rotational movement of the respective first or second housing (122a, 122b).

12. The assembly of claim 9, wherein each of the first locking dog and the second locking dog (120a, 120b) has a distal portion (128a, 128b), a central portion (126a, 126b), and a proximal portion (124a, 124b), wherein the central portion (126a, 126b) has an outer diameter greater than an outer diameter of the distal portion (128a, 128b).

13. The assembly of claim 12, wherein the first spring (160a) acts against a distal surface (128a) of the central portion (126a) of the first locking dog (120a) and the second spring (160b) acts against a distal surface (128b) of the central portion (126b) of the second locking dog (120b).

14. The assembly of claim 12, wherein each of the first housing and the second housing (122a, 122b) has a distal portion (168a, 168b), a proximal portion (162a, 162b), and a central portion (166a, 166b), the proximal portion (162a, 162b) having an inner diameter greater than an inner diameter of the central portion and the central portion (166a, 166b) having an inner diameter greater than an inner diameter of the distal portion (168a, 168b), wherein the first spring (160a) is positioned about the distal portion (128a) of the first locking dog (120a) and configured to extend into the central portion (166a) of the first housing (122a), wherein the second spring (160b) is positioned about the distal portion (128b) of the second locking dog (120b) and configured to extend into the central portion (166b) of the second housing (122b).

15. The assembly of claim 9, wherein each of the first housing (122a) and second housing (122b) includes a stop (164a, 164b) limiting a range of movement of the respective first and second locking dogs (120a, 120b) out of the inner cavity (112).

16. The assembly of claim 1, further comprising:
wherein the body (110) includes a first housing portion (122a) having a proximal cavity (162a) adjacent to a central cavity (166a), the proximal cavity (162a) having an inner diameter greater than an inner diameter of the central cavity (166a) defining a first step (164a) between the proximal cavity (162a) and the central cavity (166a) in the first housing portion (122a);
wherein the first locking dog (120a) is slidably engaged within the first housing portion (122a);
wherein the first locking dog (120a) has a central portion (126a) and a distal portion (128a), the central portion (126a) having an outer diameter greater than an outer diameter of the distal portion (128b) defining a second step between the central portion (126a) and the distal portion (128a) of the first locking dog (120a);
wherein the second step of the first locking dog (120a) is displaced toward the first step (164a) of the first housing portion as the first locking dog (120a) is displaced out of the inner cavity of the body (110), the first step (164a) defining an outer stop for the first locking dog (120a); and/or
wherein the body (110) includes a second housing portion (122b) having a proximal cavity (162b) adjacent to a central cavity (166b), the proximal cavity (162b) having an inner diameter greater than an inner diameter of the central cavity defining a third step between the proximal cavity and the central cavity (166b) in the second housing portion (122);
wherein the second locking dog (120b) is slidably engaged within the second housing portion (122b);
wherein the second locking dog (120b) has a central portion (126b) and a distal portion (128b), the central portion (126b) having an outer diameter greater than an outer diameter of the distal portion (128b) defining a fourth step between the central portion (126b) and the distal portion (128b) of the second locking dog (120b);
wherein the fourth step of the second locking dog (120b) is displaced toward the third step of the second housing portion (122b) as the second locking dog (120b) is displaced out of the inner cavity of the body (110), the third step defining an outer stop for the second locking dog (120b).

17. The assembly of claim 1, wherein the body (110) has an upper end with a flange (114) receiving a rotational force from a driver.

## Patentansprüche

1. Verriegelungsbügelanordnung (100), umfassend:
einen Körper (110), der einen inneren Hohlraum (112) mit einer unteren Öffnung enthält, einen ersten zylindrischen Hohlraum (116a) an einer ersten Seite des Körpers (110) und einen zweiten zylindrischen Hohlraum (116b) an einer zweiten Seite des Körpers (110) gegenüber der ersten Seite;
einen ersten Verriegelungsbügel (120a) in dem ersten zylindrischen Hohlraum (116a), der sich wenigstens teilweise durch die erste Seite des Körpers (110) erstreckt und in den inneren Hohlraum (112) hinein und daraus heraus verlagerbar ist;
einen zweiten Verriegelungsbügel (120b) in dem zweiten zylindrischen Hohlraum (116b), der sich wenigstens teilweise durch die zweite Seite des Körpers (110) erstreckt und in den inneren Hohlraum (112) hinein und daraus heraus verlagerbar ist;
einen Mechanismus (140) zur gleichzeitigen Verlagerung des ersten und des zweiten Verriegelungsbügels (120a, 120b) mit mechanischer Kraftverstärkung; **gekennzeichnet durch**
eine erste Verriegelungsbügelverlängerung (150a), die ein erstes Ende hat, das sich durch einen Schlitz (152) in einer gekrümmten Seite des ersten zylindrischen Hohlraums (116a) erstreckt und mit dem ersten Verriegelungsbügel (120a) verbunden ist, und ein zweites Ende, das mit dem Mechanismus (140) gekoppelt ist, wobei der Mechanismus (140) den ersten Verriegelungsbügel (120a) mittels der ersten Verriegelungsbügelverlängerung (150a) verlagert; und
eine zweite Verriegelungsbügelverlängerung (150b), die ein erstes Ende hat, das sich durch einen Schlitz (154) in einer gekrümmten Seite des zweiten zylindrischen Hohlraums (116b) erstreckt und mit dem zweiten Verriegelungsbügel (120b) verbunden ist, und ein zweites Ende, das mit dem Mechanismus (140) gekoppelt ist, wobei der Mechanismus (140) den zweiten Verriegelungsbügel (120b) mittels der zweiten Verriegelungsbügelverlängerung (150b) verlagert.

2. Verriegelungsbügelanordnung nach Anspruch 1, wobei der Mechanismus (140) eine Nockenanordnung enthält, die um eine Nockenachse (130) herum drehbar ist, wobei die Nockenanordnung (140) selektiv jeden von dem ersten und dem zweiten Verriegelungsbügel (120a, 120b) gleichzeitig bei Drehung verlagert, wobei die Verriegelungsbügelanordnung ferner einen Hebel (132) an einer Außenseite des Körpers (110) zum Betätigen der Nockenanordnung (140) umfasst, wobei der Hebel (132) um die Nockenachse (130) herum drehbar ist.

3. Anordnung nach Anspruch 1, wobei der Mechanismus eine Nockenanordnung (140) enthält, die um eine Nockenachse (130) herum drehbar ist, wobei die Nockenanordnung (140) selektiv jeden von dem ersten und dem zweiten Verriegelungsbügel (120a, 120b) gleichzeitig bei Drehung verlagert, und wobei die Nockenanordnung (140) einen ersten Nocken (142) enthält, der den ersten Verriegelungsbügel (120a) verlagert, und einen zweiten Nocken (144), der den zweiten Verriegelungsbügel (12b) verlagert.

4. Anordnung nach Anspruch 1,
wobei sich die erste Verriegelungsbügelverlängerung (150a) durch den ersten Verriegelungsbügel (120a) erstreckt oder integral damit gebildet ist, und zwei entgegengesetzte Enden hat, die jeweils an dem Mechanismus (40) angreifen; und
wobei sich die zweite Verriegelungsbügelverlängerung (150b) durch den zweiten Verriegelungsbügel (120b) erstreckt oder integral damit gebildet ist, und zwei entgegengesetzte Enden hat, die jeweils an dem Mechanismus (40) angreifen.

5. Anordnung nach Anspruch 1, wobei der Mechanismus (140) einen Aktuator (1140) und einen Scherenmechanismus (1145) enthält, die jeweils positioniert sind zwischen der ersten Verriegelungsbügelverlängerung (1150a), die an dem ersten Verriegelungsbügel (1120a) angreift, und der zweiten Verriegelungsbügelverlängerung (1150b), die an dem zweiten Verriegelungsbügel (1120b) angreift.

6. Anordnung nach Anspruch 1, wobei der Mechanismus (140) ein Führungsschraubenmechanismus (743a, 743b) ist, der wenigstens eine Schraube (743a, 743b) enthält, die den ersten und den zweiten Verriegelungsbügel (720a, 720b) verlagert, wobei die wenigstens eine Schraube (743a, 743b) wenigstens ein Zahnrad (745a, 745b) hat, das gleichzeitig durch ein Aktuatorzahnrad angetrieben wird,
wobei die wenigstens eine Schraube eine erste Schraube (743a) enthält, die den ersten Verriegelungsbügel (720a) verlagert, und eine zweite Schraube, die den zweiten Verriegelungsbügel (720b) verlagert, wobei sowohl die erste als auch die zweite Schraube (743a, 743b) ein Zahnrad (745a, 745b) an einem proximalen Ende hat, das gleichzeitig durch ein Aktuatorzahnrad (732) angetrieben wird, oder
wobei die Anordnung ferner einen Motor (741) umfasst, der das Aktuatorzahnrad antreibt.

7. Anordnung nach Anspruch 1, wobei der Mechanismus einer von Folgenden ist:
a) ein Zahnstangenmechanismus, der ein Ritzel (841) enthält, eine erste Zahnstange (843a), die den ersten Verriegelungsbügel (820a) verlagert, und eine zweite Zahnstange (843b), die den zweiten Verriegelungsbügel (820b) verlagert;
b) ein Kurbelwelle- und Stangenmechanismus, der eine Kurbelwelle (941) enthält, eine erste Stange (943a), die drehbar an der Kurbelwelle (941) gesichert ist und den ersten Verriegelungsbügel (920a) verlagert, und eine zweite Stange (943b), die drehbar an der Kurbelwelle (941) gesichert ist und den zweiten Verriegelungsbügel (920b) verlagert; oder
c) ein Schiebenocken (1040), der mittels eines Griffs (1034) nach oben und unten betätigt wird.

8. Anordnung nach Anspruch 1, wobei der erste und der zweite Verriegelungsbügel (120a, 120b) beide entlang einer Verriegelungsbügelachse verlagerbar sind, wobei der Mechanismus (40) eine Nockenanordnung enthält, die um eine Nockenachse (130) herum drehbar ist, wobei die Nockenachse die Verriegelungsbügelachse (130) ist oder zu der Verriegelungsbügelachse orthogonal ist.

9. Anordnung nach Anspruch 1, wobei sowohl der erste als auch der zweite Verriegelungsbügel (120a, 120b) in Richtung des inneren Hohlraums (112) federvorgespannt sind, ferner umfassend ein erstes Gehäuse, umfassend den ersten Verriegelungsbügel (120a) und eine erste Feder, und ein zweites Gehäuse, umfassend den zweiten Verriegelungsbügel (120b) und eine zweite Feder.

10. Anordnung nach Anspruch 9, wobei das erste Gehäuse (122a) abnehmbar in dem ersten zylindrischen Hohlraum (112) an der ersten Seite des Körpers (110) gesichert ist, und das zweite Gehäuse (122b) abnehmbar in dem zweiten zylindrischen Hohlraum (112) an der zweiten Seite des Körpers (110) gesichert ist.

11. Anordnung nach Anspruch 10, wobei sowohl das erste als auch das zweite Gehäuse (112a, 112b) abnehmbar in der ersten beziehungsweise der zweiten Öffnung (116a, 116b) mittels eines Passstifts (115) gesichert sind, der an einer komplementären Oberfläche an dem jeweiligen ersten oder zweiten Gehäuse (122a, 122b) angreift und eine axiale und eine Drehbewegung des jeweiligen ersten oder zweiten Gehäuses (122a, 122b) verhindert.

12. Anordnung nach Anspruch 9, wobei sowohl der erste Verriegelungsbügel als auch der zweite Verriegelungsbügel (120a, 120b) einen distalen Bereich (128a, 128b), einen zentralen Bereich (126a, 126b), und einen proximalen Bereich (124a, 124b) hat, wobei der zentrale Bereich (126a, 126b) einen Außendurchmesser hat, der größer als ein Außendurchmesser des distalen Bereichs (128a, 128b) ist.

13. Anordnung nach Anspruch 12, wobei die erste Feder (160a) gegen eine distale Oberfläche (128a) des zentralen Bereichs (126a) des ersten Verriegelungsbügels (120a) wirkt, und die zweite Feder (160b) gegen eine distale Oberfläche (128b) des zentralen Bereichs (126b) des zweiten Verriegelungsbügels (120b) wirkt.

14. Anordnung nach Anspruch 12, wobei sowohl das erste Gehäuse als auch das zweite Gehäuse (122a, 122b) einen distalen Bereich (168a, 168b), einen proximalen Bereich (162a, 162b), und einen zentralen Bereich (166a, 166b) hat, wobei der proximale Bereich (162a, 162b) einen Innendurchmesser hat, der größer als ein Innendurchmesser des zentralen Bereichs ist, und der zentrale Bereich (166a, 166b) einen Innendurchmesser hat, der größer als ein Innendurchmesser des distalen Bereichs (168a, 168b) ist, wobei die erste Feder (160a) um den distalen Bereich (128a) des ersten Verriegelungsbügels (120a) positioniert und dazu konfiguriert ist, sich in den zentralen Bereich (166a) des ersten Gehäuses (122a) hinein zu erstrecken, wobei die zweite Feder (160b) um den distalen Bereich (128b) des zweiten Verriegelungsbügels (120b) positioniert und dazu konfiguriert ist, sich in den zentralen Bereich (166b) des zweiten Gehäuses (122b) hinein zu erstrecken.

15. Anordnung nach Anspruch 9, wobei sowohl das erste Gehäuse (122a) als auch das zweite Gehäuse (122b) einen Anschlag (164a, 164b) enthält, der einen Bewegungsbereich des ersten beziehungsweise zweiten Verriegelungsbügels (120a, 120b) aus dem inneren Hohlraum (112) heraus begrenzt.

16. Anordnung nach Anspruch 1, ferner umfassend:
wobei der Körper (110) einen ersten Gehäusebereich (122a) mit einem proximalen Hohlraum (162a) benachbart zu einem zentralen Hohlraum (166a) enthält, wobei der proximale Hohlraum (162a) einen Innendurchmesser hat, der größer als ein Innendurchmesser des zentralen Hohlraums (166a) ist, wodurch eine erste Stufe (164a) zwischen dem proximalen Hohlraum (162a) und dem zentralen Hohlraum (166a) in dem ersten Gehäusebereich (122a) definiert wird;
wobei der erste Verriegelungsbügel (120a) verschiebbar innerhalb des ersten Gehäusebereichs (122a) angreift;
wobei der erste Verriegelungsbügel (120a) einen zentralen Bereich (126a) und einen distalen Bereich (128a) hat, wobei der zentrale Bereich (126a) einen Außendurchmesser hat, der größer als ein Außendurchmesser des distalen Bereichs (128b) ist, wodurch eine zweite Stufe zwischen dem zentralen Bereich (126a) und dem distalen Bereich (128a) des ersten Verriegelungsbügels (120a) definiert wird;
wobei die zweite Stufe des ersten Verriegelungsbügels (120a) in Richtung der ersten Stufe (164a) des ersten Gehäusebereichs verlagert wird, wenn der erste Verriegelungsbügel (120a) aus dem inneren Hohlraum des Körpers (110) heraus verlagert wird, wobei die erste Stufe (164a) einen äußeren Anschlag für den ersten Verriegelungsbügel (120a) definiert; und/oder
wobei der Körper (110) einen zweiten Gehäusebereich (122b) mit einem proximalen Hohlraum (162b) benachbart zu einem zentralen Hohlraum (166b) enthält, wobei der proximale Hohlraum (162b) einen Innendurchmesser hat, der größer als ein Innendurchmesser des zentralen Hohlraums ist, wodurch eine dritte Stufe zwischen dem proximalen Hohlraum und dem zentralen Hohlraum (166b) in dem zweiten Gehäusebereich (122) definiert wird;
wobei der zweite Verriegelungsbügel (120b) verschiebbar innerhalb des zweiten Gehäusebereichs (122b) angreift;
wobei der zweite Verriegelungsbügel (120b) einen zentralen Bereich (126b) und einen distalen Bereich (128b) hat, wobei der zentrale Bereich (126b) einen Außendurchmesser hat, der größer als ein Außendurchmesser des distalen Bereichs (128b) ist, wodurch eine vierte Stufe zwischen dem zentralen Bereich (126b) und dem distalen Bereich (128b) des zweiten Verriegelungsbügels (120ab definiert wird;
wobei die vierte Stufe des zweiten Verriegelungsbügels (120b) in Richtung der dritten Stufe des zweiten Gehäusebereichs (122b) verlagert wird, wenn der zweite Verriegelungsbügel (120b) aus dem inneren Hohlraum des Körpers (110) heraus verlagert wird, wobei die dritte Stufe einen äußeren Anschlag für den zweiten Verriegelungsbügel (120b) definiert.

17. Anordnung nach Anspruch 1, wobei der Körper (110) ein oberes Ende mit einem Flansch (114) hat, der eine Drehkraft von einem Antreiber empfängt.

## Revendications

1. Un ensemble (100) à doigts de verrouillage, comprenant :
un corps (110) incluant une cavité (112) intérieure ayant une ouverture inférieure, une première cavité (116a) cylindrique sur une première face du corps (110), et une deuxième cavité (116b) cylindrique sur une deuxième face du corps (110) opposée à la première face :
un premier doigt (120a) de verrouillage dans la première cavité (116a) cylindrique traversant au moins en partie la première face du corps (110) et pouvant entrer dans la cavité (112) intérieure et en sortir ;
un deuxième doigt (120b) de verrouillage dans la deuxième cavité (116b) cylindrique traversant au moins en partie la deuxième face du corps (110), et pouvant entrer de la cavité (112) intérieure et en sortir ;
un mécanisme (140) pour déplacer simultanément le premier et le deuxième doigts (120a, 120b) de verrouillage avec avantage mécanique ; **caractérisé par**
un prolongement (150a) du premier doigt de verrouillage ayant une première extrémité passant dans une fente (152) dans une face incurvée de la première cavité (116a) cylindrique et relié au premier doigt (120a) de verrouillage et une deuxième extrémité accouplée au mécanisme (140), dans lequel le mécanisme (140) déplace le premier doigt (120a) de verrouillage par l'intermédiaire du prolongement (150a) du premier doigt de verrouillage ; et
un prolongement (150b) du deuxième doigt de verrouillage ayant une première extrémité passant dans une fente (154) dans une face incurvée de la deuxième cavité (116b) cylindrique et relié au deuxième doigt (120b) de verrouillage et une deuxième extrémité accouplée au mécanisme (140), dans lequel le mécanisme (140) déplace le deuxième doigt (120b) de verrouillage par l'intermédiaire du prolongement (150b) du deuxième doigt de verrouillage.

2. L'ensemble à doigts de verrouillage de la revendication 1, dans lequel le mécanisme (140) comprend un ensemble à came pouvant tourner autour d'un axe (130) de came, l'ensemble (140) à came déplaçant sélectivement chacun du premier et du deuxième doigts (120a, 120b) de verrouillage simultanément par rotation, l'ensemble à doigts de verrouillage comprenant en outre un levier (132) à l'extérieur du corps (110) pour actionner l'ensemble (140) à came, dans lequel le levier (132) est monté à rotation autour de l'axe (130) de came.

3. L'ensemble à doigts de verrouillage de la revendication 1, dans lequel le mécanisme comprend un ensemble (140) à came pouvant tourner autour d'un axe (130) de came, l'ensemble (140) à came déplaçant sélectivement chacun du premier et du deuxième doigts (120a, 120b) de verrouillage simultanément par rotation, et dans lequel l'ensemble (140) à came comprend une première came (142) déplaçant le premier doigt (120a) de verrouillage et la deuxième came (144) déplaçant le deuxième doigt (120b) de verrouillage.

4. L'ensemble à doigts de verrouillage de la revendication 1,
dans lequel le prolongement (150a) du premier doigt de verrouillage passe dans ou est formé d'une pièce avec le premier doigt (120a) de verrouillage et a deux extrémités chacune enclenchée avec le mécanisme (40) ; et
dans lequel le prolongement (150b) du deuxième doigt de verrouillage passe dans ou est formé d'une pièce avec le deuxième doigt (120b) de verrouillage et a deux extrémités opposées chacune enclenchée avec le mécanisme (40).

5. L'ensemble à doigts de verrouillage de la revendication 1, dans lequel le mécanisme (140) comprend un actionneur (1140) et un mécanisme (1145) de ciseau, chacun en position entre le prolongement (1150a) du premier doigt de verrouillage enclenché avec le premier doigt (1120a) de verrouillage et le prolongement (1150b) du deuxième doigt de verrouillage enclenché avec le deuxième doigt (1120b) de verrouillage.

6. L'ensemble à doigts de verrouillage de la revendication 1, dans lequel le mécanisme (140) est un mécanisme (743a, 743b) à tige filetée comprenant au moins une première vis (743a, 743b) déplaçant le premier et le deuxième doigts (720a, 720b) de verrouillage, la au moins une vis (743a, 743b) ayant au moins un engrenage (745a, 745b) entraîné simultanément par un engrenage d'actionnement,
dans lequel la au moins une vis comprend une première vis (743a) déplaçant le premier doigt (720a) de verrouillage et une deuxième vis déplaçant le deuxième doigt (720b) de verrouillage, chacune de la première et de la deuxième vis (743a, 743b) ayant un engrenage (745a, 745b) à une extrémité proximale entraîné simultanément par un engrenage (732) d'actionnement, ou
dans lequel l'ensemble comprend en outre un moteur (741) entraînant l'engrenage d'actionnement.

7. L'ensemble à doigts de verrouillage de la revendication 1, dans lequel le mécanisme est l'un de :
a) un mécanisme à crémaillère et pignon comprenant un pignon (841), une première crémaillère (843a), déplaçant le premier doigt (820a) de verrouillage, et une deuxième crémaillère (843b), déplaçant le deuxième doigt (820b) de verrouillage ;
b) un mécanisme à crémaillère et barre comprenant une crémaillère (941), une première barre (943a) fixée à rotation à la crémaillère (941) et déplaçant le premier doigt (920a) de verrouillage, et une deuxième barre (943b) fixée à rotation à la crémaillère (941) et déplaçant le deuxième doigt (920b) de verrouillage ; ou
c) une canne (1040) coulissante actionnée vers le haut et vers le bas par une poignée (1034).

8. L'ensemble à doigts de verrouillage de la revendication 1, dans lequel le premier et le deuxième doigts (120a, 120b) de verrouillage sont déplaçables tous deux suivant un axe de doigt de verrouillage, dans lequel le mécanisme (40) comprend un ensemble à came pouvant tourner autour d'un axe (130) de came, dans lequel l'axe de came est l'axe (130) du doigt de verrouillage ou est perpendiculaire à l'axe du doigt de verrouillage.

9. L'ensemble à doigts de verrouillage de la revendication 1, dans lequel chacun du premier et du deuxième doigts (120a, 120b) de verrouillage est soumis à l'effet d'un ressort le faisant aller vers la cavité (112) intérieure, comprenant en outre un premier logement comprenant le premier doigt (120a) de verrouillage et un premier ressort, et un deuxième logement comprenant le deuxième doigt (120b) de verrouillage et un deuxième ressort.

10. L'ensemble à doigts de verrouillage de la revendication 9, dans lequel le premier logement (122a) est fixé de manière amovible dans la première cavité (112) cylindrique sur la première face du corps (110) et le deuxième logement (122b) est fixé de manière amovible dans la deuxième cavité (112) cylindrique sur la deuxième face du corps (110).

11. L'ensemble à doigts de verrouillage de la revendication 10, dans lequel chacun des premier et deuxième logements (112a, 112b) est fixé de manière amovible dans la première et la deuxième ouvertures (116a, 116b), respectivement, par une cheville (115) de fixation s'encliquetant sur une surface complémentaire du premier ou du deuxième logements (122a, 122b) respectif et empêchant un mouvement axial et de rotation du premier ou du deuxième logement (122a, 122b) respectif.

12. L'ensemble à doigts de verrouillage de la revendication 9, dans lequel chacun du premier doigt de verrouillage et du deuxième doigt (120a, 120b) de verrouillage a un tronçon (128a, 128b) distal, un tronçon (126a, 126b) central et un tronçon (124a, 124b) proximal, dans lequel le tronçon (126a, 126b) central a un diamètre extérieur plus grand qu'un diamètre extérieur du tronçon (128a, 128b) distal.

13. L'ensemble à doigts de verrouillage de la revendication 12, dans lequel le premier ressort (160a) agit sur une surface (128a) distale du tronçon (126a) central du premier doigt (120a) de verrouillage et le deuxième ressort (160b) agit sur une surface (128b) distale du tronçon (126b) central du deuxième doigt (120b) de verrouillage.

14. L'ensemble à doigts de verrouillage de la revendication 12, dans lequel chacun du premier logement et du deuxième logement (122a, 122b) a un tronçon (168a, 168b) distal, un tronçon (162a, 162b) proximal et un tronçon (166a, 166b) central, le tronçon (162a, 162b) proximal ayant un diamètre intérieur plus grand qu'un diamètre intérieur d'un tronçon central et le tronçon (166a, 166b) central ayant un diamètre intérieur plus grand qu'un diamètre intérieur du tronçon (168a, 168b) distal, dans lequel le premier ressort (160a) est en position autour du tronçon (128a) distal du premier doigt (120a) de verrouillage et est configuré pour s'étendre dans le tronçon (166a) central du premier logement (122a), dans lequel le deuxième ressort (160b) est en position autour du tronçon (128b) distal du deuxième doigt (120b) de verrouillage et est configuré pour s'étendre dans le tronçon (166b) central du deuxième logement (122b).

15. L'ensemble à doigts de verrouillage de la revendication 9, dans lequel chacun du premier logement (122a) et du deuxième logement (122b) comprend une butée (164a, 164b) limitant une plage de mouvement de sortie des premier et deuxième doigts (120a, 120b) de verrouillage respectifs de la cavité (112) intérieure.

16. L'ensemble à doigts de verrouillage de la revendication 1, comprenant en outre :
dans lequel le corps (110) comprend un premier tronçon (122a) de logement ayant une cavité (162a) proximale contigüe à une cavité (166a) centrale, la cavité (162a) proximale ayant un diamètre intérieur plus grand qu'un diamètre intérieur de la cavité (166a) centrale définissant un premier gradin (164a) entre la cavité (162a) proximale et la cavité (166a) centrale dans le premier tronçon (122a) de logement ;
dans lequel le premier doigt (120a) de verrouillage pénètre à coulissement dans le premier tronçon (122a) de logement ;
dans lequel le premier doigt (120a) de verrouillage a un tronçon (126a) central et un tronçon (128a) distal, le tronçon (126a) central ayant un diamètre plus grand qu'un diamètre extérieur du tronçon (128b) distal en définissant un deuxième gradin entre le tronçon (126a) central et le tronçon (128a) distal du premier doigt (120a) de verrouillage ;
dans lequel le deuxième gradin du premier doigt (120a) de verrouillage est déplacé vers le premier gradin (164a) du premier tronçon de logement, alors que le premier doigt (120a) de verrouillage sort de la cavité intérieure du corps (110), le premier gradin (164a) définissant une butée extérieure pour le premier doigt (120a) de verrouillage ; et/ou
dans lequel le corps (110) comprend un deuxième tronçon (122b) de logement ayant une cavité (162b) proximale contigüe à une cavité (166b) centrale, la cavité (162b) proximale ayant un diamètre intérieur plus grand qu'un diamètre intérieur de la cavité centrale en définissant un troisième gradin entre la cavité proximale et la cavité (166b) centrale dans le deuxième tronçon (122) de logement ;
dans lequel le deuxième doigt (120b) de verrouillage coulisse dans le deuxième tronçon (122b) de logement ;
dans lequel le deuxième doigt (120b) de verrouillage a un tronçon (126b) central et un tronçon (128b) distal, le tronçon (126b) central ayant un diamètre extérieur plus grand qu'un diamètre extérieur du tronçon (128b) distal en définissant un quatrième gradin entre le tronçon (126b) central et le tronçon (128b) distal du deuxième doigt (120b) de verrouillage ;
dans lequel le quatrième gradin du deuxième doigt (120b) de verrouillage est déplacé vers le troisième gradin du deuxième tronçon (122b) de logement, alors que le deuxième doigt (120b) de verrouillage sort de la cavité intérieure du corps (110), le troisième gradin définissant une butée extérieure pour le deuxième doigt (120b) de verrouillage.

17. L'ensemble à doigts de verrouillage de la revendication 1, dans lequel le corps (110) a une extrémité supérieure ayant une bride (114) recevant une force de rotation d'un dispositif d'entraînement.
